# EUROPÄISCHE PATENTSCHRIFT

(11) **EP 4 054 337 B1**
(45) Veröffentlichungstag und Bekanntmachung des Hinweises auf die Patenterteilung: **13.08.2025**
(21) Anmeldenummer: 20800922.5
(22) Anmeldetag: 04.11.2020
(51) Int. Cl.: A01N 47/40, A01P 21/00

(54) **VERWENDUNG VON ACYLCYANAMIDEN ODER DEREN SALZEN ZUR REGULIERUNG DES PFLANZENWACHSTUMS**
USE OF ACYLCYANAMIDES OR THEIR SALTS FOR PLANT GROWTH REGULATION
UTILISATION D'ACYLCYANAMIDES OU DE LEURS SELS POUR LA RÉGULATION DE LA CROISSANCE DES PLANTES

(30) Priorität: 08.11.2019 DE 102019130148
(43) Veröffentlichungstag der Anmeldung: 14.09.2022
(73) Patentinhaber: Alzchem Trostberg GmbH, 83308 Trostberg (DE)
(72) Erfinder: GÜTHNER, Thomas, 83308 Trostberg (DE); GEHRMANN, Hubertus, 84550 Feichten (DE); EBERL, Martin, 84494 Niederbergkirchen (DE); MARTÍNEZ RAMOS, José, 80687 München (DE)
(74) Vertreter: Weickmann & Weickmann PartmbB
(86) Internationale Anmeldenummer: PCT/EP2020/080925
(87) Internationale Veröffentlichungsnummer: WO 2021/089601

(56) Entgegenhaltungen:
- WO-A1-2014/122066
- WO-A1-87/04348
- DE-A1- 1 907 193
- DE-A1- 3 031 636
- DE-A1- 3 150 404
- DE-A1- 4 004 379
- DE-C- 708 428
- US-A- 4 569 782

## Beschreibung

Die vorliegende Erfindung betrifft die Verwendung von Acylcyanamiden oder deren Salzen als Wirkstoff von Pflanzenwachstumsregulatoren, insbesondere zur Brechung der Dormanz von Fruchtgehölz.

Pflanzenwachstumsregulatoren sind Wirkstoffe, die die Wachstums-, Entwicklungs- und Stoffwechselprozesse von Nutz- und Kulturpflanzen bereits bei Anwendung in geringsten Dosen gezielt beeinflussen. Unter dem Begriff Pflanzenwachstumsregulator werden sowohl natürliche Phytohormone als auch synthetische Stoffe zusammengefasst. Mit Hilfe von Pflanzenwachstumsregulatoren sollen in der agrarwirtschaftlichen Pflanzenproduktion negative Auswirkungen zahlreicher Umweltfaktoren reduziert oder verhindert werden oder positive Auswirkungen verstärkt werden. Durch Einsatz von Pflanzenwachstumsregulatoren kann somit das Ertragspotential von Nutz- und Kulturpflanzen gesteigert, Standortfaktoren stärker ausgeschöpft sowie die Effektivität von Intensivierungsmaßnahmen gesichert werden.

WO 2014/122066 A1 beschreibt substituierte Aminoazole als Pflanzenwachstumsregulatoren. DE 40 04 379 A1 beschreibt die Verwendung von Erdalkalisalzen von Acylcyanamiden als Katalysatoren für die Ethoxylierung bzw. Propoxylierung von Verbindungen mit aktiven H-Atomen. WO 87/04348 beschreibt acylierte Cyanamidverbindungen. DE 30 31 636 A1 beschreibt die Verwendung von Acylcyanamiden als Korrosionsschutzmittel. DE 1 907 193 beschreibt Acylcyanamide mit biologischer, insbesondere herbicider Wirksamkeit.

Dormanz ist eine Bezeichnung für eine Ruheperiode im Entwicklungs- und Lebenszyklus von Pflanzen, die sich auf Knospen und Samen erstrecken kann und die durch das Nichtwachsen der Pflanzen gekennzeichnet ist. Dormanz kann durch Licht, Temperatur oder Feuchtigkeit aufgehoben bzw. aufgebrochen werden. Das sogenannte Brechen der Dormanz wird beispielsweise bei einer Reihe von Samen durch artspezifische Kälteperioden induziert ("Stratifikation"). In ähnlicher Weise, nämlich durch Einfluss von Kälte bzw. Frost wird auch die Knospenruhe beendet, wobei in beiden Fällen Konzentrationsänderungen der Phytohormone Abscisinsäure, Auxine und Gibberelline zu beobachten sind. Diese natürlichen Ruheperioden sind pflanzen-physiologisch von Bedeutung, da ein zu früher Austrieb im Fall von nachfolgenden Kälteperioden zu einem Einfrieren und eventuellen Absterben von neu gebildeten Pflanzenteilen führen kann.

Das Brechen der Dormanz, insbesondere der Knospendormanz, kann auch durch Einfluss von Pflanzenwachstumsregulatoren induziert werden, die durch äußerliche Anwendung auf die Pflanzen aufgebracht werden. So ist Cyanamid als Wirkstoff zur Dormanzbrechung, speziell bei Tafelobst, seit geraumer Zeit bekannt. Entsprechende Anwendungen wurden z.B. in DE 3150404 und ZA 8302332 beschrieben. Weitere Beschreibungen der Anwendung von Cyanamid-haltigen Spritzbrühen zur Dormanzbrechung finden sich z.B. in:
- Tafeltrauben: Y. Shulman et. al., Scientia Horticulturae (1983), 19, 97, P. Spiegel-Roy et. al., HortScience (1987), 22, 208,
- Kiwifrüchte: C.C.Nee, New Zealand Journal of Crop and Horticultural Science (1991), 19, 419,
- Pfirsich: J. H. Siller-Cepeda, HortScience (1992), 27, 874.

Die künstliche, durch Anwendung geeigneter Wirkstoffe eingeleitete Dormanzbrechung ist insbesondere wirtschaftlich wertvoll, um die Ernte auf einen früheren als den natürlichen Zeitpunkt zu verschieben, da dann höhere Preise für die Früchte erzielt werden können. Für den Anbau von Pflanzen (z.B. Weintrauben oder Kirschen) in tropischen Regionen ist eine künstliche Brechung der Dormanz und damit ein absichtlich und zu einem berechneten Zeitpunkt ausgelöstes Austreiben der Knospen sogar unentbehrlich, da diese Pflanzen in tropischer Umgebung natürlicherweise kaum und nur sehr ungleichmäßig austreiben würden. Insofern ist die Behandlung mit dormanzbrechenden Mitteln unabdingbar, um z.B. Tafeltrauben oder Kirschen in tropischen Bergregionen anzubauen, und damit den Weltmarkt außerhalb der Saison gemäßigter Breiten auf Nord- oder Südhalbkugel der Erde zu beliefern.

Cyanamid zur Anwendung als Spritzbrühe zur Dormanzbrechung wird üblicherweise als wässrige Lösung, z.B. mit 50% Cyanamidgehalt und ggf. weiteren Zusätzen, wie z.B. Stabilisatoren, Farbstoffen oder oberflächenaktiven Stoffen in den Handel gebracht. Alternativ wurde in DE 102014003082 A1 ein organisch-ölhaltiges Konzentrat auf Basis Cyanamid beschrieben, welches nach Verdünnen mit Wasser eine verbesserte dormanzbrechende Wirkung aufweist.

Neben der erwünschten dormanzbrechenden Wirkung bei Pflanzen hat Cyanamid leider auch vielfältige physiologische Wirkungen auf Tiere und den Menschen. So ist Cyanamid als stark ätzend (Haut-zerstörend), akut giftig und fruchtschädigend eingestuft. In weitergehenden Untersuchungen hat sich herausgestellt, dass bei der Verwendung von Cyanamid oder Cyanamid-haltigen Lösungen in der landwirtschaftlichen Anwendung besondere Arbeitsschutzmaßnahmen einzuhalten sind.

Cyanamid ist zudem ein polymerisierbarer Stoff, der nur unter besonderen Vorsichtsmaßnahmen transportiert und gelagert werden kann (vgl. K.-D. Wehrstedt et. al., Journal of Hazardous Materials 170 (2009) 829-835). Konzentrate zur Herstellung einer Cyanamid-haltigen Spritzbrühe unterliegen bereits bei üblichen Lagertemperaturen der Degradation bzw. Dimerisation unter Bildung von Cyanoguanidin, so dass nur eine zeitlich beschränkte Wirksamkeit gegeben ist.

Der vorliegenden Erfindung liegt daher die Aufgabe zugrunde, ein für den Anwender weitgehend sicheres agrarwirtschaftliches Mittel zur Regulierung des Pflanzenwachstums zur Verfügung zu stellen, das aufgrund seiner Inhaltsstoffe als sicher eingestuft und hinsichtlich seiner Wirkung als effizient beurteilt werden kann.

Gelöst werden diese Aufgaben durch eine Verwendung gemäß Anspruch 1, ein Konzentrat gemäß Anspruch 7 sowie ein Verfahren gemäß Anspruch 15. Bevorzugte Ausführungsformen der Erfindung sind in den Unteransprüchen angegeben, die wahlweise miteinander kombiniert werden können.

Damit ist gemäß einer ersten Ausführung die Verwendung von mindestens einer Verbindung aus der Gruppe der Acylcyanamide oder einem Salz hiervon gemäß Formel (I) oder Formel (II) zur Regulierung des generativen Wachstums von Pflanzen, insbesondere des generativen Wachstums von Nutz- und Kulturpflanzen, bevorzugt des generativen Wachstums von Fruchtgehölz, oder zur Brechung der Dormanz von Fruchtgehölz Gegenstand der vorliegenden Erfindung, wobei für Formel (I) und Formel (II) gilt 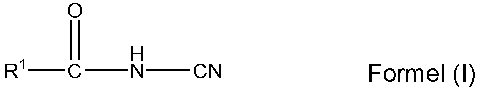 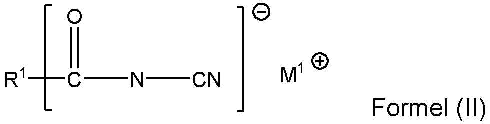 wobei für die Reste R¹, R², R³, R⁴, R⁵ und die Kationen M¹, M² unabhängig voneinander gilt:
- R¹ =: Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, oder ein Rest Q,
wobei für Q gilt:
- Q =: C₁- bis C₂₀-Alkyl, C₃- bis C₁₂-Cycloalkyl, C₂- bis C₂₀-Alkenyl, C₁bis C₂₀-Alkoxy, Aryl, Alkylaryl oder Arylalkyl, jeweils substituiert mit einem Rest der Formel (III) oder Formel (IV) 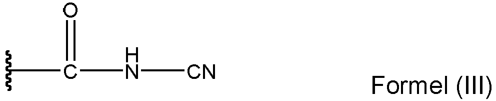 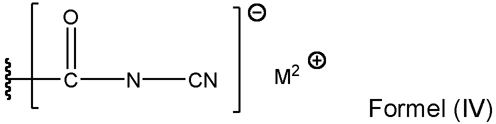
- M¹, M² =: unabhängig voneinander Li, Na, K, ½Ca, ½Mg oder NR²R³R⁴R⁵,
- R², R³, R⁴, R⁵ =: unabhängig voneinander Wasserstoff oder C₁- bis C₂₀-Alkyl.

Gemäß der vorliegenden Erfindung kann der Rest R¹ Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl, Arylalkyl oder einen Rest Q bedeuten, wobei Q für einen Rest C₁bis C₂₀-Alkyl, C₃- bis C₁₂-Cycloalkyl, C₂- bis C₂₀-Alkenyl, C₁- bis C₂₀-Alkoxy, Aryl, Alkylaryl, oder Arylalkyl steht, der seinerseits mit einem Rest der Formel (III) oder Formel (IV) substituiert ist.

Im Zusammenhang mit der vorliegenden Erfindung soll dabei unter C₁- bis C₂₀-Alkyl ein gesättigter, linearer oder verzweigter, aliphatischer Rest mit einer Kettenlänge von 1 bis 20 Kohlenstoffatomen, insbesondere von 1 bis 8 Kohlenstoffatomen, verstanden sein, insbesondere ein Alkylrest, der die allgemeine Formel CₙH₂ₙ₊₁ aufweist, wobei n = eine ganze Zahl von 1 bis 20, bevorzugt eine ganze Zahl von 1 bis 12 und insbesondere eine ganze Zahl von 1 bis 8, bedeutet. Dabei ist bevorzugt vorgesehen, dass C₁- bis C₂₀-Alkyl insbesondere Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, 2-Ethylpropyl, n-Hexyl, n-Heptyl, n-Octyl, n-Nonyl, n-Decyl, n-Undecyl oder n-Dodecyl bedeutet.

Gemäß der vorliegenden Erfindung bedeutet C₁- bis C₂₀-Alkyl besonders bevorzugt Methyl, Ethyl, n-Propyl, 1-Methylethyl, n-Butyl, 1-Methylpropyl, 2-Methylpropyl, 1,1-Dimethylethyl, n-Pentyl oder n-Hexyl. Ganz besonders bevorzugt bedeutet C₁- bis C₂₀-Alkyl gemäß der vorliegenden Erfindung Methyl, Ethyl, n-Propyl, n-Butyl, n-Pentyl oder n-Hexyl.

Im Zusammenhang mit der vorliegenden Erfindung soll weiterhin unter C₃-bis C₁₂-Cycloalkyl ein gesättigter, monocyclischer oder bicyclischer aliphatischer Rest mit 3 bis 12 Kohlenstoffatomen verstanden sein, insbesondere ein Cycloalkylrest, der die allgemeine Formel CₙH₂ₙ₋₁ mit n = eine ganze Zahl von 3 bis 12 aufweist. Dabei ist bevorzugt vorgesehen, dass C₃- bis C₁₂-Cycloalkyl insbesondere Cyclopropyl, Cyclobutyl, Cyclopentyl, Cyclohexyl oder Cycloheptyl bedeutet, wobei diese Cycloalkylreste ihrerseits weiterhin bevorzugt einfach oder mehrfach mit alkylsubstituiert sein können.

Gemäß der vorliegenden Erfindung bedeutet C₃- bis C₁₂-Cycloalkyl besonders bevorzugt Cyclopentyl oder Cyclohexyl.

Weiterhin soll im Zusammenhang mit der vorliegenden Erfindung unter Alkandiyl ein gesättigter, linearer oder verzweigter, aliphatischer Rest verstanden sein, der zwei Bindungsstellen und insbesondere eine Kettenlänge von 1 bis 20 Kohlenstoffatomen (C₁-C₂₀-Alkandiyl), bevorzugt von 1 bis 12 Kohlenstoffatomen (C₁-C₁₂-Alkandiyl), insbesondere von 1 bis 6 Kohlenstoffatomen (C₁-C₆-Alkandiyl), aufweist, und der insbesondere die allgemeine Formel CₙH₂ₙ aufweist, wobei n = eine ganze Zahl von 1 bis 12, insbesondere eine ganze Zahl von 1 bis 6, bedeutet.

Gemäß der vorliegenden Erfindung bedeutet Alkandiyl besonders bevorzugt Methandiyl, Ethan-1,2-diyl, Propan-1,3-diyl, Butan-1,4-diyl, Petan-1,5-diyl oder Hexan-1,6-diyl.

Weiterhin soll im Zusammenhang mit der vorliegenden Erfindung unter C₂-bis C₂₀-Alkenyl ein ungesättigter, linearer oder verzweigter, aliphatischer Rest mit einer Kettenlänge von 2 bis 20 Kohlenstoffatomen mit ein, zwei, drei oder vier Doppelbindungen verstanden sein, der insbesondere abhängig von der Zahl Anzahl der Doppelbindungen die allgemeine Formel aufweist: eine Doppelbindung, CₙH₂ₙ₋₁ mit n = eine ganze Zahl von 2 bis 20, zwei Doppelbindungen: CₙH₂ₙ₋₃ mit n = eine ganze Zahl von 4 bis 20, drei Doppelbindungen CₙH₂ₙ₋₅ mit n = eine ganze Zahl von 6 bis 20 oder vier Doppelbindungen CₙH₂ₙ₋₇ mit n = eine ganze Zahl von 8 bis 20. Dabei ist bevorzugt vorgesehen, dass C₂- bis C₂₀-Alkenyl insbesondere Ethenyl, Propenyl, Butenyl, Pentenyl, Hexenyl, Heptenyl, Octenyl, Nonenyl, Decenyl, Undecenyl, Dodecenyl, Tridecenyl, Tetradecenyl, Pentadecenyl, Hexadecenyl, Heptadecenyl, Octadecenyl, Butadienyl, Pentadienyl, Hexadienyl, Heptadienyl, Octadienyl, Nonadienyl, Decadienyl, Hexatrienyl, Heptatrienyl, Octatrienyl, Nonatrienyl oder Decatrienyl bedeutet, wobei diese Alkenylreste weiterhin bevorzugt unverzweigt oder ihrerseits einfach oder mehrfach alkylsubstituiert sein können.

Gemäß der vorliegenden Erfindung bedeutet C₂- bis C₂₀-Alkenyl besonders bevorzugt Heptenyl, Octenyl, Nonenyl, Decenyl, Undecenyl, Dodecenyl, Tridecenyl, Tetradecenyl, Pentadecenyl, Hexadecenyl, Heptadecenyl oder Octadecenyl. Ganz besonders bevorzugt bedeutet C₂- bis C₂₀-Alkenyl Tridecenyl, Tetradecenyl, Pentadecenyl, Hexadecenyl, Heptadecenyl oder Octadecenyl.

Gemäß der vorliegenden Erfindung bedeutet C₁- bis C₂₀-Alkoxy einen Rest der Formel -O-Alkyl, wobei die Bindungsstelle an dem Sauerstoff lokalisiert ist und wobei Alkyl ein C₁- bis C₂₀-Alkyl-Rest der oben angegeben Bedeutung ist. Bevorzugt ist der Rest R¹ oder Q C₁-C₁₂-Alkoxy und mehr bevorzugt C₁-C₆-Alkoxy.

Gemäß der vorliegenden Erfindung bedeutet C₁- bis C₂₀-Alkoxy besonders bevorzugt Methoxy, Ethoxy, n-Propoxy, n-Butoxy oder n-Pentoxy. Ganz besonders bevorzugt bedeutet C₁- bis C₂₀-Alkyl gemäß der vorliegenden Erfindung Methoxy oder Ethoxy.

Gemäß der vorliegenden Erfindung bedeutet Aryl einen aromatischen Rest, insbesondere einen aromatischen Rest mit 6 bis 20 Kohlenstoffatomen, bevorzugt mit 6 bis 10 Kohlenstoffatomen, besonders bevorzugt mit 6 Kohlenstoffatomen, der monocyclisch, bicyclisch oder polycyclisch sein kann. Somit kann Aryl gemäß der vorliegenden Erfindung insbesondere Phenyl, Naphthyl, Anthryl, Phenantryl, Pyrenyl oder Perylenyl bedeuten.

Gemäß der vorliegenden Erfindung bedeutet Aryl besonders bevorzugt Phenyl.

Gemäß der vorliegenden Erfindung bedeutet Arylalkyl einen Alkyl-Rest der oben wiedergegebenen Bedeutung, der mit einem Aryl-Rest der oben wiedergegebenen Bedeutung substituiert ist, wobei die Bindungsstelle des Arylalkylrestes an dem Alkylrest lokalisiert ist. Somit kann Arylalkyl gemäß der vorliegenden Erfindung insbesondere Benzyl, 1-Phenylethyl oder 1-Methyl-1-phenylethyl bedeuten.

Gemäß der vorliegenden Erfindung bedeutet Arylalkyl besonders bevorzugt Benzyl.

Gemäß der vorliegenden Erfindung bedeutet Alkylaryl einen Aryl-Rest der oben wiedergegebenen Beutung, der seinerseits einfach oder mehrfach mit einem Alkyl-Rest der oben wiedergegebenen Bedeutung substituiert ist, wobei die Bindungsstelle des Alkylarylrestes an dem Aryl-Rest lokalisiert ist.

Somit kann Alkylaryl gemäß der vorliegenden Erfindung insbesondere Tolyl, Xylyl, Pseudocumyl oder Mesityl bedeuten.

Gemäß der vorliegenden Erfindung bedeutet Alkylaryl besonders bevorzugt Tolyl.

Überraschenderweise konnte gezeigt werden, dass erfindungsgemäße Acylcyanamide oder deren Salze gemäß Formel (I) oder gemäß Formel (II) eine Wirkung als Pflanzenwachstumsregulator haben. Diese Tatsache ist umso überraschender, als dass diese Substanzen als solche seit geraumer Zeit bekannt sind (vgl. DE 32022013). Diesen Acylcyanamiden wurde bis heute jedoch lediglich eine Wirkung als Tensid (vgl. DE 708428) oder als Beschleuniger für anaerob härtende Klebstoffe zugeschrieben (DE 3003437). Eine Wirkung in der lebenden Pflanze ist nicht bekannt. Bekannt ist, dass Cyanamid selbst im Menschen und anderen Wirbeltieren schnell und vollständig zu Acetylcyanamid verstoffwechselt und somit entgiftet wird (vgl. F. N. Shirota et. al., Drug Metabolism and Disposition (1984), 12, 337 bzw. B. Mertschenk et. al., Archives of Toxicology (1991), 65, 268). So wird Acetylcyanamid über den Urin des Menschen aus dem Organismus ausgeschieden und lässt sich somit quantifizieren (vgl. DE 3827449). Ohne an die Theorie gebunden zu sein, müssen Acylcyanamide somit in Pflanzen eine von dem Entgiftungsmechanismus in Wirbeltieren verschiedene Wirkung aufweisen. Dass erfindungsgemäße Acylcyanamide, insbesondere Acetylcyanamid, in der Pflanze nicht ebenfalls "entgiftet" werden, und somit wirkungslos sind, sondern dormanzbrechende Wirkung aufweisen, stellt einen völlig überraschenden Effekt und das eigentliche Wesen der Erfindung dar.

Eine dormanzbrechende Wirkung liegt vor, wenn der Austrieb der Knospen und/oder das Blühen der Pflanzen im Vergleich zum natürlichen Austrieb und Blüte der Pflanzen zeitlich früher erfolgt. Somit wird durch die Dormanzbrechung das generative Wachstum der Pflanzen reguliert.

Erstrebenswert ist hierbei, dass ein vollständiger Austrieb und Blüte der Pflanzen, insbesondere von Nutz- und Kulturpflanzen oder Fruchtgehölzen, innerhalb einer relativ kurzen Zeitperiode erfolgt, so dass die weiteren Entwicklungsphasen der behandelten Pflanzen vorhersehbar sind. Eine solche dormanzbrechende Wirkung wurde erfindungsgemäß bei Acylcyanamiden gemäß Formel (I) oder Formel (II) beobachtet (vgl. Beispiele).

Somit kann mittels der erfindungsgemäßen Verwendung von Acylcyanamiden oder deren Salzen gemäß Formel (I) oder gemäß Formel (II) das generative Wachstums von Pflanzen, insbesondere das generative Wachstum von Nutz- und Kulturpflanzen, bevorzugt das generative Wachstum von Fruchtgehölz, reguliert, oder die Dormanz von Fruchtgehölz gebrochen werden.

Zudem haben Acylcyanamide der vorliegenden Erfindung eine für die Anwendung in der Landwirtschaft positive Eigenschaft. Diese Verbindungen sind im Vergleich zu Cyanamid als lagerstabil und in Flüssigkeiten weitgehend gut löslich einzustufen. Es hat sich zudem gezeigt, dass diese Acylcyanamide in wässrigen Lösungen entgegen Cyanamid nicht einer Degradation und/oder Dimerisationstendenz unterliegen.

Erfindungsgemäße Acylcyanamide der Formel (I) sind schwache NH-Säuren, so dass sie mit Basen stabile Salze der Formel (II) bilden können. Diese Salze weisen einen neutralen pH-Wert auf, sind physiologisch gut verträglich, lagerstabil und sind überraschenderweise als dormanzbrechende Wirkstoffe aktiv.

Acylcyanamide und deren Salze gemäß Formel (I) oder Formel (II) sind somit ideal geeignet, Cyanamid in denjenigen Anwendungsbereichen zu ersetzen, in denen Cyanamid aufgrund seiner toxikologischen oder sonstigen Eigenschaften nicht zum Einsatz kommen kann oder kommen sollte.

Dabei können gemäß der vorliegenden Erfindung Acylcyanamide oder deren Salze gemäß Formel (I) oder gemäß Formel (II) eingesetzt werden, deren Rest R¹ für einen Rest aus der Gruppe Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, oder einen Rest Q steht, wobei Q für einen Rest aus der Gruppe C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV), steht.

Bevorzug können hierbei solche Acylcyanamide oder deren Salze gemäß Formel (I) oder gemäß Formel (II) eingesetzt werden, deren Rest R¹ für einen Rest aus der Gruppe Wasserstoff, C₁- bis C₂₀-Alkyl, C₃- bis C₁₂-Cycloalkyl, C₂- bis C₂₀-Alkenyl, C₁- bis C₂₀-Alkoxy oder einen Rest Q steht, wobei Q für einen Rest aus der Gruppe C₁- bis C₂₀-Alkyl, C₃- bis C₁₂-Cycloalkyl, C₂- bis C₂₀-Alkenyl, C₁- bis C₂₀-Alkoxy, jeweils substituiert mit einem Rest der Formel (III) oder Formel (IV), steht.

Weiter bevorzugt können solche Acylcyanamide oder deren Salze gemäß Formel (I) oder gemäß Formel (II) eingesetzt werden, deren Rest R¹ für einen Rest aus der Gruppe Wasserstoff, C₁- bis C₂₀-Alkyl, C₂- bis C₂₀-Alkenyl, C₁- bis C₂₀-Alkoxy oder einen Rest Q steht, wobei Q für einen Rest aus der Gruppe C₁- bis C₂₀-Alkyl, C₂- bis C₂₀-Alkenyl, C₁- bis C₂₀-Alkoxy, jeweils substituiert mit einem Rest der Formel (III) oder Formel (IV), steht.

Noch weiter bevorzugt können solche Acylcyanamide oder deren Salze gemäß Formel (I) oder gemäß Formel (II) eingesetzt werden, deren Rest R¹ für einen Rest aus der Gruppe Wasserstoff, C₁- bis C₂₀-Alkyl, C₂- bis C₂₀-Alkenyl oder einen Rest Q steht, wobei Q für einen Rest aus der Gruppe C₁-bis C₂₀-Alkyl, C₂- bis C₂₀-Alkenyl, jeweils substituiert mit einem Rest der Formel (III) oder Formel (IV), steht.

Besonders bevorzugt können solche Acylcyanamide oder deren Salze gemäß Formel (I) oder gemäß Formel (II) eingesetzt werden, deren Rest R¹ für einen Rest aus der Gruppe Wasserstoff, C₁- bis C₂₀-Alkyl oder einen Rest Q steht, wobei Q für einen Rest aus der Gruppe C₁- bis C₂₀-Alkyl substituiert mit einem Rest der Formel (III) oder Formel (IV), steht.

Die freien Säuren erfindungsgemäßer Acylcyanamide liefern Lösungen, die einen pH-Wert ähnlich einer essigsauren Lösung aufweisen. Derartig saure Lösungen sind nur für spezielle landwirtschaftliche Anwendungen geeignet. Bevorzugt sind daher gemäß der vorliegenden Erfindung Salze der Acylcyanamide gemäß Formel (II).

Bezüglich der Varianz der Kationen hat sich gezeigt, dass Alkalisalze und Erdalkalisalze stabile Salze erfindungsgemäßer Acylcyanamide bilden. Bevorzugt sind daher solche Acylcyanamide oder deren Salze gemäß Formel (I) oder Formel (II), für deren Kationen M¹ und M² unabhängig voneinander Li, Na, K, ½Ca oder ½Mg bedeutet. Weiter bevorzugt sind Alkalisalze. Somit bedeutet M¹ und M² unabhängig voneinander bevorzugt Li, Na oder K, ganz besonders bevorzugt Na oder K.

Bevorzugt kann somit gemäß der vorliegenden Erfindung mindestens eine Verbindung aus der Gruppe der Gruppe der Acylcyanamide oder einem Salz hiervon gemäß Formel (I) oder Formel (II) zur Regulierung des generativen Wachstums von Pflanzen, insbesondere des generativen Wachstums von Nutz- und Kulturpflanzen, bevorzugt des generative Wachstums von Fruchtgehölz, oder zur Brechung der Dormanz von Fruchtgehölz verwendet werden, wobei für die Reste R¹, R², R³, R⁴, R⁵ und die Kationen M¹, M² unabhängig voneinander gilt:
- R¹ =: Wasserstoff, C₁- bis C₂₀-Alkyl, C₃- bis C₁₂-Cycloalkyl, C₂- bis C₂₀-Alkenyl, C₁- bis C₂₀-Alkoxy oder ein Rest Q, wobei für Q gilt:
Q = C₁- bis C₂₀-Alkyl, C₃- bis C₁₂-Cycloalkyl, C₂- bis C₂₀-Alkenyl, C₁- bis C₂₀-Alkoxy, jeweils substituiert mit einem Rest der Formel (III) oder Formel (IV),
- M¹, M² =: unabhängig voneinander Li, Na, K, ½Ca, ½Mg oder NR²R³R⁴R⁵,
- R², R³, R⁴, R⁵ =: unabhängig voneinander Wasserstoff oder C₁- bis C₂₀-Alkyl.

Weiter bevorzugt sind hierbei Verbindungen aus der Gruppe der Gruppe der Acylcyanamide oder einem Salz hiervon gemäß Formel (I) oder gemäß Formel (II), wobei für die Reste R¹, R², R³, R⁴, R⁵ und die Kationen M¹, M² unabhängig voneinander gilt:
- R¹ =: Wasserstoff, C₁- bis C₂₀-Alkyl, C₂- bis C₂₀-Alkenyl, oder C₁- bis C₂₀-Alkoxy,
- M¹, M² =: unabhängig voneinander Li, Na, K, ½Ca, ½Mg oder NR²R³R⁴R⁵,
- R², R³, R⁴, R⁵ =: unabhängig voneinander Wasserstoff oder C₁- bis C₂₀-Alkyl.

Weiter bevorzugt sind hierbei Verbindungen aus der Gruppe der Gruppe der Acylcyanamide oder einem Salz hiervon gemäß Formel (I) oder gemäß Formel (II), wobei für den Rest R¹ und die Kationen M¹, M² unabhängig voneinander gilt:
- R¹ =: Wasserstoff, C₁- bis C₂₀-Alkyl oder C₁- bis C₂₀-Alkoxy,
- M¹, M² =: unabhängig voneinander Li, Na, K, ½Ca oder ½Mg.

Weiterhin bevorzugt kann gemäß der vorliegenden Erfindung mindestens eine Verbindung aus der Gruppe der Acylcyanamide oder einem Salz hiervon der Formel (I) oder der Formel (II) verwendet werden, wobei für den Rest R¹ und die Kationen M¹, M² unabhängig voneinander gilt:
- R¹ =: Wasserstoff, Methyl, Ethyl, n-Propyl, 1-Methylethyl, n-Butyl, 1-Methylpropyl, 2-Methylpropyl, n-Pentyl, n-Hexyl, n-Heptyl, n-Octyl oder ein Rest Q, wobei für Q gilt:
Q = Methyl, Ethyl, n-Propyl, 1-Methylethyl, n-Butyl, 1-Methylpropyl, 2-Methylpropyl, n-Pentyl, n-Hexyl, n-Heptyl, n-Octyl, jeweils substituiert mit einem Rest der Formel (III) oder Formel (IV)
- M¹, M² =: unabhängig voneinander Na oder K.

Ganz besonders bevorzugt kann gemäß der vorliegenden Erfindung mindestens eine Verbindung aus der Gruppe Natrium-formylcyanamid, Natrium-acetylcyanamid, Natrium-propionylcyanamid, Natrium-n-butyrylcyanamid, Natrium-isobutyrylcyanamid, Natrium-methoxycarbonylcyanamid, Natrium-ethoxycarbonylcyanamid, Kalium-formylcyanamid, Kalium-acetylcyanamid, Kalium-propionylcyanamid, Kalium-n-butyrylcyanamid, Kalium-isobutyrylcyanamid, Kalium-methoxycarbonylcyanamid, Kalium-ethoxycarbonylcyanamid verwendet werden.

Alternativ bevorzugt kann gemäß der vorliegenden Erfindung mindestens eine Verbindung aus der Gruppe der Acylcyanamide oder einem Salz hiervon gemäß Formel (I) oder Formel (II), verwendet werden, wobei für die Reste R¹, R², R³, R⁴, R⁵ und die Kationen M¹, M² unabhängig voneinander gilt:
- R¹ =: Wasserstoff, Methyl, Ethyl, n-Propyl, n-Butyl, n-Pentyl, n-Hexyl, oder ein Rest der Formel (V) oder der Formel (VI), 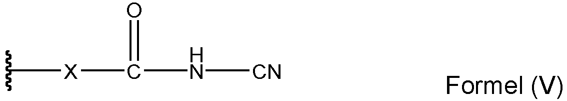 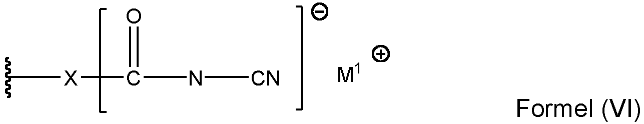
wobei für X in Formel (V) und Formel (VI) gilt:
- X =: Alkandiyl, insbesondere C₁-C₂₀-Alkandiyl,
- M¹, M² =: unabhängig voneinander Li, Na, K, ½Ca, ½Mg oder NR²R³R⁴R⁵,
- R², R³, R⁴, R⁵ =: unabhängig voneinander Wasserstoff oder C₁- bis C₂₀-Alkyl.

Alternativ bevorzugt kann gemäß der vorliegenden Erfindung auch mindestens eine Verbindung aus der Gruppe der Gruppe der Acylcyanamide oder einem Salz hiervon gemäß Formel (I) oder Formel (II) verwendet werden, wobei für den Rest R¹, R², R³, R⁴, R⁵ und die Kationen M¹, M² unabhängig voneinander gilt:
- R¹ =: Aryl, Alkylaryl oder Arylalkyl, oder ein Rest Q, wobei für Q gilt:
Q = Aryl, Alkylaryl oder Arylalkyl, jeweils substituiert mit einem Rest der Formel (III) oder Formel (IV),
- M¹, M² =: unabhängig voneinander Li, Na, K, ½Ca, ½Mg oder NR²R³R⁴R⁵,
- R², R³, R⁴, R⁵ =: unabhängig voneinander Wasserstoff oder C₁- bis C₂₀-Alkyl.

Erfindungsgemäß können die Acylcyanamide gemäß Formeln (I) oder (II) zur Regulierung des generativen Wachstums von Pflanzen, insbesondere des generativen Wachstums von Nutz- und Kulturpflanzen, bevorzugt des generativen Wachstums von Fruchtgehölz, oder zur Brechung der Dormanz von Fruchtgehölzen verwendet werden.

Hierbei ist unter generativem Wachstum einer Pflanze dasjenige Wachstum der Pflanze zu verstehen, dass durch die Ausbildung von Geschlechtsmerkmalen wie beispielsweise Blüten, Samen, Früchte oder Pflanzenteilen, die hauptsächlich der Vermehrung dienen, gekennzeichnet ist. Die Regulierung von generativen Wachstum kann bei verschiedenen Pflanzenarten durch unterschiedliche Faktoren wie Tageslichtdauer, Kältestunden oder Trockenstress erfolgen. Ein direkter Übergang von der Dormanz in das generative Wachstum kann auch induziert werden.

Weiterhin soll unter Dormanz eine Zeitperiode der Ruhe im Entwicklungsund Lebenszyklus von Pflanzen verstanden sein, die durch ein Nichtwachsen der Pflanze gekennzeichnet ist.

Weiterhin soll unter einer Nutz- und Kulturpflanze eine Pflanze verstanden sein, die durch das Eingreifen der Menschen zielgerichtet angebaut, kultiviert oder züchterisch bearbeitet wird und als Ganzes oder in Teilen als Nahrungsmittel, Genussmittel, Heilmittel, als Futtermittel für Tiere oder für technische Zwecke, beispielsweise als nachwachsender Rohstoff Verwendung findet. Weiterhin sollen unter Fruchtgehölzen oder Fruchtgehölzpflanzen mehrjährige blüten- und holzbildende Pflanzen verstanden sein. Der Begriff umfasst mehrjährige Bäume oder Sträucher, die ausdauernde (perennierende) Pflanzen sind, deren Achsen verholzen und dauerhaft erhalten bleiben, so dass ihr oberirdisches Sprosssystem im Lauf der Jahre an Größe zu nimmt.

Solche Bäume oder Sträucher, die fruchttragend sind, werden auch als Fruchtgehölze definiert und umfassen Weintraube *(Vitis vinifera),* Kiwi *(Actinidia deliciosa, Actinidia chinensis* oder *Actinidia arguta)*, Heidelbeere *(Vaccinium myrtillus, Vaccinium corymbosum*, *Vaccinium virgatum, Vaccinium angustifolium* oder *Vaccinium myrtilloides),* Kirsche *(Prunus avium* oder *Prunus cerasus),* Pflaume oder Zwetschge *(Prunus domestica),* Apfel *(Malus domestica* oder *Malus orientalis),* Birne *(Pyrus communis, Pyrus pyraster* oder *Pyrus pyrifolia),* Quitte *(Cydonia oblonga),* Pfirsich *(Prunus* persica), Aprikose *(Prunus armeniaca),* Himbeere *(Rubus idaeus),* Kaki (*Diospyrus kaki),* Feige *(Ficus carica)* oder deren Kreuzungsprodukte oder deren Kultursorten.

Die Ausbildung der Blüten von Fruchtgehölzen kann je nach Gattung und Art unterschiedlich an dem Baum oder Strauch erfolgen. Als Kauliflorie (Caulifolorie) wird bei tropischen Pflanzenfamilien, wie z.B. Brotfruchtbaum (*Artocarpus altitis*), Jackfrucht (*Artocarpus heterophyllus*), Papaya (*Carica papaya*) oder Kakao (*Theobroma cacao*), die Stammblütigkeit bzw. folgend Stammfrüchtigkeit bezeichnet, wo am verholzten Stamm Einzelblüten oder Blütenstände gebildet werden.

Die Ausbildung der Blüten von Fruchtgehölzen kann je nach Gattung und Art aber auch über eine Unterform der Astfrüchtigkeit (Ramiflorie) erfolgen. Hier kommt es zu einer Blütenbildung an den Zweigen. Beide Formen der Blütigkeit sind bei Kakao zu finden. Hierzu kommt es am zwei- bis dreijährigen verholzten Astholz an den Blattachseln angeordneten Nebenknospen mit meristematischen Gewebe zur büschelweisen Blütenbildung. Gemäß der vorliegenden Erfindung können insbesondere Nutz- und Kulturpflanzen behandelt werden. Diese Nutz- und Kulturpflanzen können als natürlich vorkommende Pflanzen, als Kreuzungsprodukte dieser Pflanzen oder als Kultursorte behandelt werden.

Damit ist gemäß einer weiteren Ausführung auch die Verwendung von mindestens einer Verbindung aus der Gruppe der Acylcyanamide oder einem Salz hiervon gemäß Formel (I) oder Formel (II) zur Regulierung des generative Wachstums von Pflanzen, insbesondere des generative Wachstum von Nutz- und Kulturpflanzen, bevorzugt des generative Wachstums von Fruchtgehölz, oder zur Brechung der Dormanz von Fruchtgehölz Gegenstand der Erfindung, bei der die Pflanzen, die Nutz- und Kulturpflanzen oder das Fruchtgehölz aus der Gruppe von Pflanzen umfassend Weintraube (*Vitis vinifera*), Kiwi (*Actinidia deliciosa, Actinidia chinensis* oder *Actinidia arguta*), Heidelbeere (*Vaccinium myrtillus, Vaccinium corymbosum*, *Vaccinium virgatum, Vaccinium angustifolium* oder *Vaccinium myrtilloides*), Kirsche (*Prunus avium* oder *Prunus cerasus*), Pflaume oder Zwetschge (*Prunus domestica*), Apfel (*Malus domestica* oder *Malus orientalis*), Birne (*Pyrus communis, Pyrus pyraster* oder *Pyrus pyrifolia*), Quitte (*Cydonia oblonga*), Pfirsich (*Prunus persica*), Aprikose (*Prunus armeniaca*), Himbeere (*Rubus idaeus*), Kaki (*Diospyrus kaki*), Feige (*Ficus carica*) oder deren Kreuzungsprodukte oder deren Kultursorten behandelt werden.

Gemäß einer weiteren Ausführung ist auch ein Pflanzenwachstumsregulator-Konzentrat Gegenstand der vorliegenden Erfindung. Dieses Konzentrat dient der anwendungsfreundlichen Bereitstellung der erfindungsgemäßen Acylcyanamide oder deren Salze als Pflanzenwachstumsregulator oder Dormanzbrecher. Somit ist auch ein Pflanzenwachstumsregulator-Konzentrat zur Regulierung des generativen Wachstums von Pflanzen, insbesondere des generativen Wachstums von Nutz- und Kulturpflanzen, bevorzugt des generativen Wachstums von Fruchtgehölzen, oder zur Brechung der Dormanz von Fruchtgehölzen, Gegenstand der vorliegenden Erfindung, das umfasst:
a) mindestens einen Wirkstoff aus der Gruppe der Acylcyanamide oder einem Salz hiervon gemäß Formel (I) oder Formel (II), wobei für Formel (I) und Formel (II) gilt: 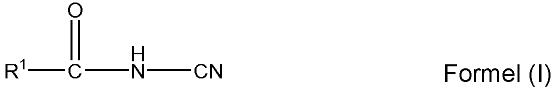 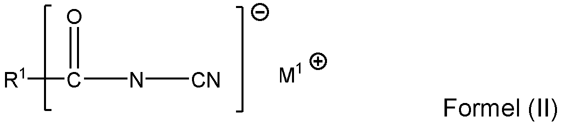 wobei für die Reste R¹, R², R³, R⁴, R⁵ und die Kationen M¹, M² unabhängig voneinander gilt:
   - R¹ =: Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl, Arylalkyl oder ein Rest Q, wobei für Q gilt:
   Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 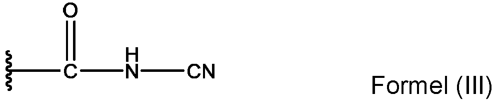 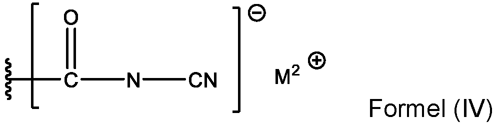
   - M¹, M² =: unabhängig voneinander Li, Na, K, ½Ca, ½Mg oder NR²R³R⁴R⁵,
   - R², R³, R⁴, R⁵ =: unabhängig voneinander Wasserstoff oder C₁- bis C₂₀-Alkyl,
b) mindestens ein für landwirtschaftliche Zwecke unbedenkliches oder zugelassenes Additiv aus der Gruppe der Lösemittel, Öle, oberflächenaktive Stoffe oder Emulgatoren,
wobei das Konzentrat eine Konzentration an Wirkstoff im Bereich von 200 bis 600 g/l aufweist.

Ein weiterer Gegenstand der vorliegenden Erfindung ist ein Pflanzenwachstumsregulator-Konzentrat zur Regulierung des generativen Wachstums von Pflanzen oder zur Brechung der Dormanz von Fruchtgehölz, umfassend
a) mindestens einen Wirkstoff aus der Gruppe der Acylcyanamide oder einem Salz hiervon gemäß Formel (I) oder Formel (II), wobei für Formel (I) und Formel (II) gilt: 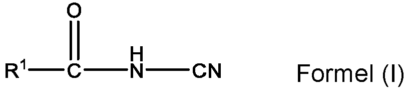 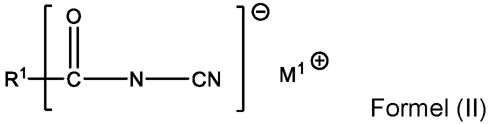 wobei für die Reste R¹, R², R³, R⁴, R⁵ und die Kationen M¹, M² unabhängig voneinander gilt:
   - R¹ =: Wasserstoff,
   ein Alkylrest ausgewählt aus der Gruppe Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, 2-Ethylpropyl oder n-Hexyl,
   ein Alkenylrest ausgewählt aus der Gruppe Ethenyl, Propenyl, Butenyl, Pentenyl, Hexenyl, Butadienyl, Pentadienyl Hexadienyl oder Hexatrienyl,
   C₃- bis C₁₂-Cycloalkyl, C₁- bis C₂₀-Alkoxy, Aryl, Alkylaryl oder Arylalkyl, oder ein Rest Q, wobei für Q gilt:
      Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 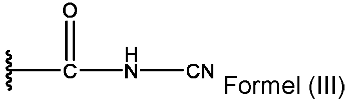 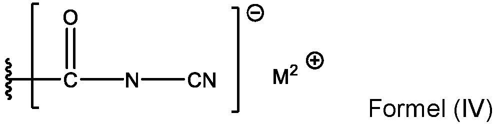
   - M¹, M² =: unabhängig voneinander Li, Na, K, ½Ca, ½Mg oder NR²R³R⁴R⁵,
   - R², R³, R⁴, R⁵ =: unabhängig voneinander Wasserstoff oder C₁- bis C₂₀-Alkyl,
b) mindestens ein für landwirtschaftliche Zwecke unbedenkliches oder zugelassenes Additiv aus der Gruppe der Lösemittel, Öle, oberflächenaktive Stoffe oder Emulgatoren,
wobei das Konzentrat eine Konzentration an Wirkstoff im Bereich von 100 bis 600 g/l aufweist.

Als Wirkstoff können in diesem Konzentrat alle hierin beschriebenen Acylcyanamide sowie alle hierin als bevorzugt oder alternativ bevorzugt beschriebenen Acylcyanamide eingesetzt werden, wobei das Konzentrat eine Konzentration an Wirkstoff im Bereich von 100 bis 600 g/l aufweist. Gemäß einer bevorzugten Ausführung weist das Konzentrat eine Konzentration an Wirkstoff im Bereich von 200 bis 600 g/l, insbesondere eine Konzentration an Wirkstoff im Bereich von 300 bis 600 g/l, auf.

Gemäß einer bevorzugten Ausführung liegt das Konzentrat als Lösung, emulgierbare Lösung oder Emulsion, insbesondere als wässrige Lösung oder als Emulsion, vor.

Unter dem Begriff Emulsion ist dabei und im Sinne der vorliegenden Erfindung eine Mischung von wenigstens zwei flüssigen Komponenten zu verstehen, die nicht vollständig miteinander mischbar sind und die insbesondere eine Mischungslücke aufweisen. Hierbei ist eine Komponente als dispergierte oder innere flüssige Phase in einer anderen kohärenten äußeren flüssigen Phase verteilt. Unter dem Begriff Öl-in-Wasser-Emulsion, auch als O/W-Emulsion bezeichnet, ist im Sinne der vorliegenden Erfindung eine Emulsion zu verstehen, in der eine Ölphase in einer kohärenten hydrophilen, vorzugsweise wässrigen Phase dispergiert ist. Die Ölphase umfasst eine hydrophobe, mit Wasser nicht mischbare organische Phase, die ein Öl umfasst. Hierbei ist die Ölphase in der hydrophilen, vorzugsweise wässrigen Phase in Form von Tröpfchen dispergiert. Unter dem Begriff Wasser-in-Öl-Emulsion, auch als W/O-Emulsion bezeichnet, ist im Sinne der vorliegenden Erfindung eine Emulsion zu verstehen, in der eine Wasserphase oder eine wässrige Phase in einer kohärenten hydrophoben Phase, vorzugsweise Ölphase, dispergiert ist. Unter dem Begriff Emulsion werden im Sinne der vorliegenden Erfindung auch Miniemulsionen und Mikroemulsionen umfasst.

Weiterhin soll unter einer emulgierbaren Lösung eine solche Lösung verstanden sein, die nach der Zugabe zu Wasser (oder der Zugabe von Wasser zu der Zusammensetzung) selbstständig eine Emulsion ausbildet oder, die nach der Zugabe zu Wasser (oder der Zugabe von Wasser zu der Zusammensetzung) und einer mechanischen Vermischung, wie beispielsweise Rühren, eine Emulsion ausbildet.

Somit ist auch ein Pflanzenwachstumsregulator-Konzentrat zur Regulierung des generativen Wachstums von Pflanzen, insbesondere des generativen Wachstums von Nutz- und Kulturpflanzen, bevorzugt des generativen Wachstums von Fruchtgehölzen, oder zur Brechung der Dormanz von Fruchtgehölzen, Gegenstand der vorliegenden Erfindung, das eine Lösung, emulgierbare Lösung oder Emulsion, insbesondere eine wässrige Lösung oder Emulsion, umfasst, die ihrerseits umfasst:
a) mindestens einen Wirkstoff aus der Gruppe der Acylcyanamide oder einem Salz hiervon gemäß Formel (I) oder Formel (II), wobei für Formel (I) und Formel (II) gilt: 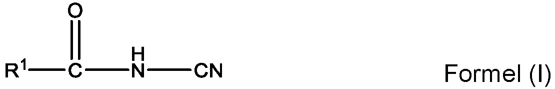 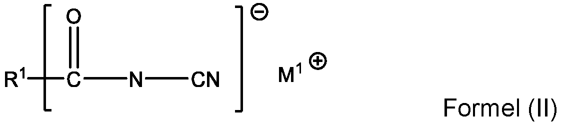 wobei für die Reste R¹, R², R³, R⁴, R⁵ und die Kationen M¹, M² unabhängig voneinander gilt:
   - R¹ =: Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl, Arylalkyl oder ein Rest Q, wobei für Q gilt:
   Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 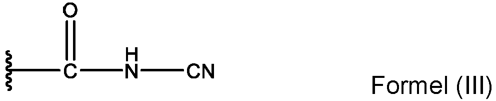 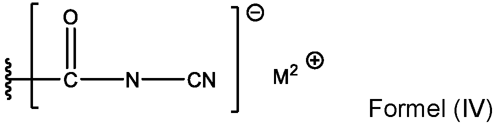
   - M¹, M² =: unabhängig voneinander Li, Na, K, ½Ca, ½Mg oder NR²R³R⁴R⁵,
   - R², R³, R⁴, R⁵ =: unabhängig voneinander Wasserstoff oder C₁- bis C₂₀-Alkyl,
b) mindestens ein für landwirtschaftliche Zwecke unbedenkliches oder zugelassenes Additiv aus der Gruppe der Lösemittel, Öle, oberflächenaktive Stoffe oder Emulgatoren,
wobei die Lösung, die emulgierbare Lösung oder die Emulsion eine Konzentration an Wirkstoff gemäß a) im Bereich von 200 bis 600 g/l aufweist.

Ein weiterer Gegenstand der vorliegenden Erfindung ist ein Pflanzenwachstumsregulator-Konzentrat zur Regulierung des generativen Wachstums von Pflanzen, insbesondere des generativen Wachstums von Nutz- und Kulturpflanzen, bevorzugt des generativen Wachstums von Fruchtgehölzen, oder zur Brechung der Dormanz von Fruchtgehölz, das eine Lösung, emulgierbare Lösung oder Emulsion, insbesondere eine wässrige Lösung oder Emulsion, umfasst, die ihrerseits umfasst:
a) mindestens einen Wirkstoff aus der Gruppe der Acylcyanamide oder einem Salz hiervon gemäß Formel (I) oder Formel (II), wobei für Formel (I) und Formel (II) gilt: 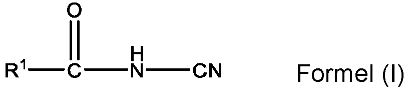 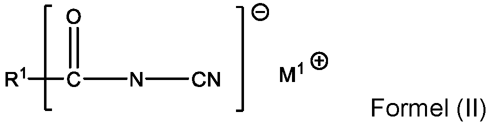 wobei für die Reste R¹, R², R³, R⁴, R⁵ und die Kationen M¹, M² unabhängig voneinander gilt:
   - R¹ =: Wasserstoff,
   ein Alkylrest ausgewählt aus der Gruppe Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, 2-Ethylpropyl oder n-Hexyl,
   ein Alkenylrest ausgewählt aus der Gruppe Ethenyl, Propenyl, Butenyl, Pentenyl, Hexenyl, Butadienyl, Pentadienyl, Hexadienyl oder Hexatrienyl,
   C₃- bis C₁₂-Cycloalkyl, C₁- bis C₂₀-Alkoxy, Aryl, Alkylaryl oder Arylalkyl, oder ein Rest Q, wobei für Q gilt:
      Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 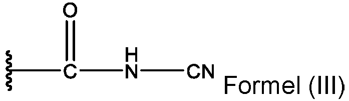 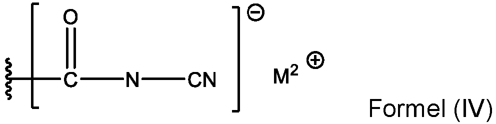
   - M¹, M² =: unabhängig voneinander Li, Na, K, ½Ca, ½Mg oder NR²R³R⁴R⁵,
   - R², R³, R⁴, R⁵ =: unabhängig voneinander Wasserstoff oder C₁- bis C₂₀-Alkyl,
b) mindestens ein für landwirtschaftliche Zwecke unbedenkliches oder zugelassenes Additiv aus der Gruppe der Lösemittel, Öle, oberflächenaktive Stoffe oder Emulgatoren,
wobei das Konzentrat eine Konzentration an Wirkstoff gemäß a) im Bereich von 100 bis 600 g/l aufweist.

Bevorzugt umfasst das Pflanzenwachstumsregulator-Konzentrat, das weiter bevorzugt eine Lösung, eine emulgierbare Lösung oder eine Emulsion ist oder eine solche umfasst:
a) mindestens einen Wirkstoff aus der Gruppe der Acylcyanamide oder einem Salz hiervon gemäß Formel (I) oder Formel (II), und
b) mindestens ein für landwirtschaftliche Zwecke unbedenkliches oder zugelassenes Additiv aus der Gruppe der Lösemittel, und gegebenenfalls
c) mindestens ein für landwirtschaftliche Zwecke unbedenkliches oder zugelassenes Additiv aus der Gruppe der Öle, oberflächenaktive Stoffe oder Emulgatoren, und gegebenenfalls
d) mindestens einen weiteren Formulierungshilfsstoff,
wobei das Konzentrat eine Konzentration an Wirkstoff im Bereich von 100 bis 600 g/l aufweist.

Weiter bevorzugt ist ein Pflanzenwachstumsregulator-Konzentrat, das insbesondere als eine Lösung, emulgierbare Lösung oder Emulsion, insbesondere als wässrige Lösung oder als Emulsion vorliegt, das bzw. die ihrerseits umfasst:
a) mindestens einen Wirkstoffs aus der Gruppe der Acylcyanamide oder einem Salz hiervon gemäß Formel (I) oder Formel (II) umfasst, wobei für die Reste R¹, R², R³, R⁴, R⁵ und die Kationen M¹, M² unabhängig voneinander gilt:
   - R¹ =: Wasserstoff, C₁- bis C₂₀-Alkyl, C₃- bis C₁₂-Cycloalkyl, C₂- bis C₂₀-Alkenyl, C₁- bis C₂₀-Alkoxy oder ein Rest Q, wobei für Q gilt:
   Q = C₁- bis C₂₀-Alkyl, C₃- bis C₁₂-Cycloalkyl, C₂- bis C₂₀-Alkenyl, C₁- bis C₂₀-Alkoxy, jeweils substituiert mit einem Rest der Formel (III) oder Formel (IV),
   - M¹, M² =: unabhängig voneinander Li, Na, K, ½Ca, ½Mg oder NR²R³R⁴R⁵,
   - R², R³, R⁴, R⁵ =: unabhängig voneinander Wasserstoff oder C₁- bis C₂₀-Alkyl.

Besonders bevorzugt ist ein Pflanzenwachstumsregulator-Konzentrat, das insbesondere als eine Lösung, emulgierbare Lösung oder Emulsion, insbesondere als wässrige Lösung oder als Emulsion vorliegt, das bzw. die ihrerseits umfasst:
a) mindestens einen Wirkstoff aus der Gruppe Natrium-formylcyanamid, Natrium-acetylcyanamid, Natrium-propionylcyanamid, Natrium-n-butyrylcyanamid, Natrium-isobutyrylcyanamid, Natrium-methoxycarbonylcyanamid, Natrium-ethoxycarbonylcyanamid, Kalium-formylcyanamid, Kalium-acetylcyanamid, Kalium-propionylcyanamid, Kalium-n-butyrylcyanamid, Kalium-isobutyrylcyanamid, Kalium-methoxycarbonylcyanamid oder Kalium-ethoxycarbonylcyanamid,
b) mindestens ein für landwirtschaftliche Zwecke unbedenkliches oder zugelassenes Additiv aus der Gruppe der Lösemittel, und
c) mindestens ein für landwirtschaftliche Zwecke unbedenkliches oder zugelassenes Additiv aus der Gruppe der Öle, oberflächenaktive Stoffe oder Emulgatoren,
wobei das Konzentrat eine Konzentration an Wirkstoff im Bereich von 100 bis 600 g/l aufweist.

Gemäß der vorliegenden Erfindung kann das PflanzenwachstumsKonzentrat ein Lösemittel enthalten. Dabei soll im Zusammenhang mit der vorliegenden Erfindung unter einem Lösemittel jedwedes Lösemittel verstanden sein, dass für den Einsatz in der Landwirtschaft geeignet ist. Geeignete Lösemittel sind somit solche Lösemittel, die für Pflanzen verträglich sind. Besonders bevorzugt sind hierbei Wasser oder organische Lösemittel, insbesondere mit Wasser mischbare organische Lösemittel.

Dabei ist im Zusammenhang mit der vorliegenden Erfindung unter einem mit Wasser mischbaren organischen Lösemittel jedwedes organische Lösemittel zu verstehen, das definitionsgemäß verschieden ist von Wasser und dass im Massenverhältnis 1 : 1 mit Wasser bei 20 °C ein einphasiges System ergibt.

Mit den dieser Erfindung zugrundeliegenden Untersuchungen hat sich herausgestellt, dass als mit Wasser mischbares organisches Lösemittel insbesondere organische Lösemittel ausgewählt aus der Gruppe der wasserlöslichen Alkohole, Ketone, Nitrile, Amide, Glykole, Polyglykole sowie Mischungen hiervon, verwendet werden können.

Bevorzugte Lösemittel sind somit Wasser und organische Lösemittel ausgewählt aus der Gruppe Ethanol, Isopropanol, n-Propanol, Glykol, Glycerin, Polyglykol, Aceton, Methylethylketon, Acetonitril, Propionitril, Formamid, Dimethylformamid, N-Methylpyrrilidon, sowie Mischungen hiervon.

Gemäß einer besonders bevorzugten Ausführung der Erfindung umfasst das Konzentrat als Lösemittel Wasser, Ethanol, Isopropanol, n-Propanol, Glykol, Glycerin, Polyglykol oder Mischungen hiervon. Konzentrate mit diesen Lösemitteln zeigen sich als besonders lagerstabile flüssige Formulierungen, die über einen größeren Zeitraum gelagert werden können.

Somit ist auch Pflanzenwachstumsregulator-Konzentrat Gegenstand der vorliegenden Erfindung, das eine Lösung, eine emulgierbare Lösung oder eine Emulsion ist, die als Lösemittel ein Lösemittel aus der Gruppe Wasser, Ethanol, Isopropanol, Glykol, Polyglykol, Glycerin oder Mischungen dieser Lösemittel umfasst.

Gemäß einer alternativen Formulierung kann das Konzentrat auch als emulgierbare Lösung ausgefertigt sein. Daher ist gemäß einer Weiterbildung der Erfindung insbesondere auch ein Konzentrat Gegenstand der vorliegenden Erfindung, dass als emulgierbare Lösung ausgefertigt ist und das weniger als 10 Gew.-%, insbesondere weniger als 5 Gew.-%, besonders bevorzugt weniger als 3 Gew.-% Wasser weiterhin bevorzugt weniger als 2 Gew.-% Wasser und ganz besonders bevorzugt weniger als 1 Gew.-% Wasser enthält.

Gemäß der vorliegenden Erfindung kann das PflanzenwachstumsKonzentrat ein Öl enthalten. Dabei soll im Zusammenhang mit der vorliegenden Erfindung unter einem Öl jedwedes Öl verstanden sein, dass für den Einsatz in der Landwirtschaft geeignet ist. Geeignete Öle sind somit solche Öle, die für Pflanzen verträglich sind. Insbesondere kann das Öl ausgewählt werden aus der Gruppe der natürlichen Öle, insbesondere Öle tierischer oder pflanzlicher Herkunft, und synthetische Öle. Gemäß der vorliegenden Erfindung können als Öl insbesondere natürliche Öle, insbesondere Pflanzenöle verwendet werden. Pflanzenöle sind allgemein bekannt und kommerziell erhältlich. Unter dem Begriff Pflanzenöle im Sinne der vorliegenden Erfindung werden Öle aus ölliefernden Pflanzenarten wie Sojaöl, Maiskeimöl, Sonnenblumenöl, Rapsöl, Baumwollsaatöl, Leinöl, Kokosöl, Palmöl, Distelöl, Erdnussöl, Walnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle gemäß der vorliegenden Erfindung sind bevorzugt Gemische aus C₁₀- bis C₂₄-Fettsäureester. Diese C₁₀- bis C₂₄-Fettsäureester sind beispielsweise Ester ungesättigter oder gesättigter C₁₀- bis C₂₄-Fettsäuren, insbesondere mit gerader Kohlenstoffatomzahl, weiterhin bevorzugt ausgewählt aus der Gruppe Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Palmitoleinsäure (Hexadecyl-9-ensäure), Petroselinsäure (Octadecyl-6-ensäure), Ölsäure (Octadecyl-9-ensäure), Elaidinsäure (Octadecyl-9-ensäure), Gadoleinsäure (Eicosan-9-ensäure), Erucasäure (13-Docosensäure), Linolsäure (Octadec-9,12-diensäure), alpha-Linolensäure (Octadec-9,12,15-triensäure), gamma-Linolensäure (Octadec-6,9,12-triensäure) oder Mischungen hiervon.

Beispiele für Pflanzenöle sind C₁₀- bis C₂₄-Fettsäureester von Glycerin oder Glykol mit C₁₀- bis C₂₄-Fettsäuren, insbesondere Ester der aufgeführten Säuren, oder C₁₀- bis C₂₄-Fettsäureester, insbesondere Ester der aufgeführten Säuren, wie sie z.B. durch Umesterung der vorgenannten Glycerin- oder Glykolester der C₁₀- bis C₂₄-Fettsäure mit C₁- bis C₂₀-Alkoholen, wie beispielsweise Methanol, Ethanol, Propanol oder Butanol, erhalten werden können.

Die Pflanzenöle können in den erfindungsgemäßen flüssigen Zusammensetzungen beispielsweise in Form kommerziell erhältlicher Pflanzenöle, insbesondere Rapsöle wie Rapsölmethylester, beispielsweise Phytorob^{®} B (Novance, Frankreich), Edenor^{®} MESU und Agnique^{®} ME-Reihe (Cognis, Deutschland), Radia^{®} (ICI) oder Prilube^{®} (Petrofina) enthalten sein.

Insofern synthetische Öle eingesetzt werden, sind Mineralöl, Paraffinöl, Weissöl sowie synthetische Fettsäureester, insbesondere Ester von Fettsäuren mit ungerader Kohlenstoffatomanzahl, wie beispielsweise C₁₁- bis C₁₉-Fettsäuren, insbesondere ausgewählt aus der Gruppe Undecansäure, Tridecansäure, Pentadecansäure, Margarinsäure (Heptadecansäure) und Nonadecansäure, mit ein-, zwei- oder dreiwertigen C₁- bis C₅-Alkoholen, insbesondere Methanol, Ethanol, Propanol oder Butanol, bevorzugt.

Gemäß der vorliegenden Erfindung kann daher als Öl insbesondere ein Öl ausgewählt aus der Gruppe Mineralöl, Paraffinöl, Weissöl, gesättigte lineare oder verzweigte aliphatische Kohlenwasserstoffe, Ester von gesättigten oder ungesättigten Fettsäuren mit ein-, zwei- oder dreiwertigen C₁- bis C₅-Alkoholen, Ether von Fettalkoholen mit C₁- bis C₅-Alkoholen sowie Mischungen hiervon eingesetzt werden.

Bevorzugt können gemäß der vorliegenden Erfindung auch Öle aus der Gruppe Mineralöle, Mineralöle mit reduziertem Aromatenanteil, Mineralöle ohne Aromatenanteil, fette Öle, d.h. Glycerinester von Fettsäuren mit 4 bis 24 C-Atomen, Ester von C₁ bis C₂₀-Alkoholen mit Fettsäuren mit 4 bis 24 C-Atomen, bevorzugt Methyl- oder Ethylester von Fettsäuren mit 4 bis 24 C-Atomen eingesetzt werden.

Ganz besonders geeignet sind Öle aus der Gruppe umfassend Ester von C₁ bis C₂₀-Alkoholen mit Fettsäuren mit 4 bis 24 C-Atomen, insbesondere Methyl- oder Ethylester von Fettsäuren mit 4 bis 24 C-Atomen.

Somit ist auch Pflanzenwachstumsregulator-Konzentrat Gegenstand der vorliegenden Erfindung, das eine Lösung, eine emulgierbare Lösung oder eine Emulsion ist, die als Öl ein Öl aus der Gruppe der Pflanzenöle, insbesondere Pflanzenöle aus der Gruppe C₁₀- bis C₂₄-Fettsäureester, insbesondere Methyl-, Ethyl-, Glyceryl- oder Glykolester der C₁₀- bis C₂₄-Fettsäuren, insbesondere Rapsölmethylester, umfasst.

Gemäß der vorliegenden Erfindung kann das Pflanzenwachstumsregulator-Konzentrat insbesondere 0,1 bis 20 Gew.-% mindestens ein Öl, insbesondere ein Pflanzenöl, umfassen. Bevorzugt kann das Pflanzenwachstumsregulator-Konzentrat jedoch auch 0,1 bis 15 Gew.-% mindestens Öl, insbesondere ein Pflanzenöl, und weiter bevorzugt 0,1 bis 12 Gew.-% mindestens Öl, insbesondere ein Pflanzenöl, und besonders bevorzugt 0,1 bis 10 Gew.-% mindestens Öl, umfassen.

Dabei können als oberflächenaktive Stoffe (nachfolgend auch Tenside genannt) insbesondere solche oberflächenaktiven Stoffe eingesetzt werden, die einen HLB-Wert von 5 bis 20 aufweisen. Weiterhin können als oberflächenaktive Stoffe insbesondere auch kationische, anionische oder nichtionische Tenside eingesetzt werden. Besonders bevorzugt können nichtionischen Tenside eingesetzt werden.

Somit ist auch Pflanzenwachstumsregulator-Konzentrat Gegenstand der vorliegenden Erfindung, das eine Lösung, eine emulgierbare Lösung oder eine Emulsion ist, die als oberflächenaktiven Stoff einen oberflächenaktiven Stoff aus der Gruppe der nichtionischen Tenside umfasst.

Weiter bevorzugt können nichtionischen Tenside eingesetzt werden, die eine oder mehrere Verbindungen aus der Gruppe der Ethoxylate gemäß Formel (VII), der Fettalkoholglucoside gemäß Formel (VIII) oder Mischungen hiervon enthalten, wobei für Formel (VII) und (VIII) gilt,

R¹¹-O-(CH₂CH₂O)ₙ-H Formel (VII)

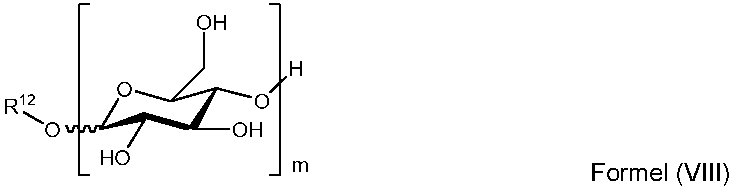

wobei für die Reste R¹¹, R¹² und die Indizes n, m gleichzeitig oder unabhängig gilt:
- R¹¹ =: eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
- R¹² =: eine lineare oder verzweigte Alkyl- oder Alkenylgruppe mit 6 bis 24 Kohlenstoffatomen,
- n =: eine Zahl von 2 bis 20,
- m =: eine Zahl von 1 bis 5.

Hierbei soll im Zusammenhang mit der vorliegenden Erfindung unter einer ein- oder mehrfunktionellen Siloxangruppe insbesondere eine Siloxangruppe verstanden sein, die durch gemischte Hydrolyse aus
a) einem oder mehreren Chlorsilanen aus der Gruppe Trimethylchlorsilan, Dimethyldichlorsilan und Methyltrichlorsilan, und
b) einem oder mehreren 3-Heteropropylsubstituierten Chlorsilanen aus der Gruppe der 3-Heteropropyl-trichlorsilan, 3-Heteropropylmethyldichlorsilan und 3-Heteropropyl-dimethylchlorsilan, wobei 3-Heteropropyl die Bedeutung hat: 3-Chlorpropyl, 3-Hydroxypropyl oder 3-(Hydroxyethoxy)propyl,
herstellbar sind.

Typische aus diesen Bausteinen herstellbare ein- oder mehrfunktionelle Siloxangruppen sind nachfolgend in den Formeln genannt, wobei Formel (IX) für eine monofunktionelle Siloxangruppe, Formel (X) für eine bifunktionelle Siloxangruppe sowie Formeln (XI) und (XII) für eine v-funktionelle Siloxangruppe steht, und für die Formeln (IX), (X), (XI) und (XII) gilt:

(H₃C)₃Si-O-((CH₃)₂SiO)ₓ-Si(CH₃)₂-(CH₂)₃- Formel (IX)

wobei für den Index x gilt:
- x =: eine Zahl von 0 bis 15, insbesondere eine Zahl von 0 bis 10, insbesondere eine Zahl von 3 bis 10,

H-(OCH₂CH₂)_{y}-O-(CH₂)₃-((CH₃)₂SiO)_{z}-Si(CH₃)₂-(CH₂)₃- Formel (X)

wobei für die Indizes y und z gilt:
- y =: eine Zahl von 2 bis 20, insbesondere eine Zahl von 2 bis 10, insbesondere eine Zahl von 3 bis 10,
- z =: eine Zahl von 0 bis 10, insbesondere eine Zahl von 0 bis 5, insbesondere eine Zahl von 1 bis 3, 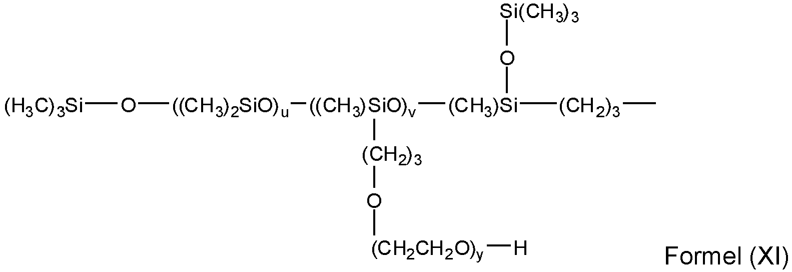
wobei für die Indizes y, u und v gilt:
- y =: eine Zahl von 2 bis 20, insbesondere eine Zahl von 2 bis 10, insbesondere eine Zahl von 3 bis 10,
- u =: eine Zahl von 0 bis 15, insbesondere eine Zahl von 0 bis 10, insbesondere eine Zahl von 0 bis 3,
- v =: eine Zahl von 0 bis 4, insbesondere eine Zahl von 0 bis 3.

Besonders bevorzugt sind v-funktionelle Siloxangruppen, insbesondere Siloxangruppen der Formel (XII), die ein Spezialfall der Formel (XI) für u = v = 0 darstellt, wobei für Formel (XII) gilt:

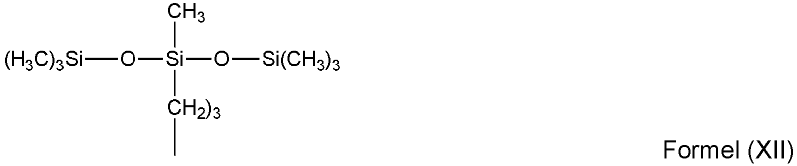

Gemäß einer besonders bevorzugten Ausführung ist vorgesehen, dass als nichtionisches Tensid ein Ethoxylat gemäß Formel (VII) eingesetzt wird, wobei für den Rest R¹¹ und den Index n gilt:
- R¹¹ =: lineare oder verzweigte Alkylgruppe mit 8 bis 18 Kohlenstoffatomen, oder alkylsubstituierte Phenylgruppe, oder ein monofunktionelles Siloxan der Formel (VII) mit x = eine Zahl von 3 bis 10, oder ein bifunktionelles Siloxan der Formel (VIII) mit z = eine Zahl von 1 bis 3 und
y = eine Zahl von 2 bis 10, oder
eine mehrfunktionelle Siloxangruppe der Formel (X) mit u = eine Zahl von 0 bis 3 und v = eine Zahl von 0 bis 3 und y = eine Zahl von 2 bis 10, insbesondere eine Zahl von 3 bis 10,
- n =: eine Zahl von 2 bis 20, insbesondere eine Zahl von 2 bis 10, insbesondere eine Zahl von 3 bis 10.

Gemäß einer weiterhin bevorzugten Ausführung, kann als nichtionisches Tensid auch ein Gemisch aus verschiedenen Ethoxylaten gemäß Formel (VII) eingesetzt werden. Hierbei hat sich besonders wirkungsvoll ein Gemisch aus mindestens zwei verschiedenen Ethoxylaten gemäß Formel (VII) gezeigt, wobei für den Rest R¹¹ und den Index n gilt:
- R¹¹ =: eine mehrfunktionelle Siloxangruppe der Formel (XI) mit u = eine Zahl von 0 bis 3 und v = eine Zahl von 0 bis 3 und y = eine Zahl von 2 bis 10,
- n =: eine Zahl von 2 bis 20, insbesondere eine Zahl von 2 bis 10, insbesondere eine Zahl von 3 bis 10.

Gemäß einer weiterhin bevorzugten Ausführung, kann als nichtionisches Tensid auch Gemisch aus verschiedenen Ethoxylaten gemäß Formel (VII) eingesetzt werden. Hierbei hat sich besonders wirkungsvoll ein Gemisch aus mindestens zwei verschiedenen Ethoxylaten gemäß Formel (VII) gezeigt, wobei für den Rest R¹¹ und den Index n gilt:
- R¹¹ =: n-Dodecyl, n-Hexadecyl und n-Octadecyl,
- n =: eine Zahl von 2 bis 20, insbesondere eine Zahl von 2 bis 10.

Ganz besonders bevorzugt sind Ethoxylate gemäß Formel (VII), wobei für den Rest R¹ und den Index n gilt:
- R¹¹ =: n-Dodecyl, n-Tetradecyl, n-Hexadecyl, n-Octadecyl, Methyldecyl, Methyldodecyl, Methyltetradecyl, oder ein Siloxan der Formel (XII),
- n =: eine Zahl von 4 bis 8.

Gemäß einer alternativen bevorzugten Ausführung ist vorgesehen, dass als nichtionisches Tensid ein Fettalkoholglucoside gemäß Formel (VIII) eingesetzt wird, wobei für den Rest R¹² und den Index m gilt:
- R¹² =: lineare Alkylgruppe mit 8 bis 18 Kohlenstoffatomen,
- m =: eine Zahl von 2 bis 5.

Ganz besonders bevorzugt sind Fettalkoholglucoside gemäß Formel (VIII), wobei für den Rest R¹² und den Index m gilt:
- R¹² =: n-Hexadecyl oder n-Octadecyl,
- m =: eine Zahl von 3 bis 5

Gemäß der vorliegenden Erfindung kann das Pflanzenwachstumsregulator-Konzentrat insbesondere 0,1 bis 10 Gew.-% mindestens ein Tensid, insbesondere ein nichtionisches Tensid umfassen. Besonders bevorzugt kann die Zusammensetzung jedoch auch 0,1 bis 5 Gew.-% mindestens ein Tensid, insbesondere ein nichtionisches Tensid, und ganz besonders bevorzugt 0,1 bis 3 Gew.-% mindestens ein Tensid, insbesondere ein nichtionisches Tensid, umfassen.

Das erfindungsgemäße Pflanzenwachstumsregulator-Konzentrat kann als unbedenkliches oder zugelassenes Additiv mindestens einen Emulgator umfassen. Bevorzugt umfasst das erfindungsgemäße Konzentrat mindestens einen Emulgator ausgewählt aus der Gruppe der Öl-in-Wasser-Emulgatoren (O/W-Emulgator), Wasser-in-Öl-Emulgatoren (W/O-Emulgator), Öl-in-Wasser-in-Öl-Emulgatoren (O/W/O-Emulgator) oder Wasser-in-Öl-in-Wasser-Emulgatoren (W/O/W-Emulgator), insbesondere mindestens einen Öl-in-Wasser-Emulgator.

Gemäß einer besonders bevorzugten Ausführung umfasst die Zusammensetzung mindestens einen Öl-in-Wasser-Emulgator und/oder einen nichtionischen Emulgator und ganz besonders bevorzugt mindestens einen nichtionischen Emulgator aus der Klasse der Öl-in-Wasser-Emulgatoren.

Somit ist auch Pflanzenwachstumsregulator-Konzentrat Gegenstand der vorliegenden Erfindung, das eine Lösung, eine emulgierbare Lösung oder eine Emulsion ist, die als Emulgator einen Emulgator aus der Gruppe der nichtionischen Öl-in-Wasser-Emulgatoren umfasst.

Bevorzugte nichtionische Emulgatoren sind ausgewählt aus der Gruppe enthaltend Fettsäurepolyglykolester, Alkylarylpolyglykolether, Fettalkoholpolyglykolether, ethoxylierte Fettalkohole, ethoxylierte Nonylphenole, Fettsäuremonoglyceride, Fettsäurediglyceride, ethoxyliertes und hydriertes oder nicht hydriertes Rizinusöl und Fettsäurealkanolamide.

Bevorzugte kationische Emulgatoren sind ausgewählt aus der Gruppe enthaltend langkettige quaternäre Ammoniumverbindungen wie Alkyltrimethylammoniumsalze und Dialkyldimethylammoniumsalze mit C8-bis C22-Alkylgruppen.

Bevorzugte anionische Emulgatoren sind ausgewählt aus der Gruppe enthaltend Fettalkoholsulfate, Alkylethersulfate und Alkylbenzolsulfonate.

Bevorzugte amphotere Emulgatoren sind ausgewählt aus der Gruppe enthaltend Betaine wie Fettsäureamidoalkylbetaine und Sulfobetaine und C8-bis C22-Alkylbetaine.

Besonders bevorzugt sind nichtionische Emulgatoren aus der Klasse der ethoxylierte Fettalkohole, insbesondere ethoxylierte C8- bis C20-Alkylalkohole. Weiterhin bevorzugt ist ein nichtionischer O/W-Emulgator aus der Klasse der ethoxylierten C8- bis C20-Alkylalkohole und ganz besonders bevorzugt ein iso-C13-Ethoxylat.

Gemäß der vorliegenden Erfindung kann das Pflanzenwachstumsregulator-Konzentrat insbesondere 0,1 bis 10 Gew.-% mindestens ein Emulgator umfassen. Besonders bevorzugt kann die Zusammensetzung jedoch auch 0,1 bis 5 Gew.-% mindestens ein Emulgator und ganz besonders bevorzugt 0,1 bis 3 Gew.-% mindestens ein Emulgator umfassen.

Im Umfang der vorliegenden Erfindung kann weiterhin vorgesehen sein, dass das Pflanzenwachstumsregulator-Konzentrat weitere Inhaltsstoffe, nämlich Formulierungshilfsstoffe, umfasst oder enthält.

Bevorzugt ist dabei vorgesehen, dass das Konzentrat weiterhin mindestens einen, insbesondere einen für landwirtschaftliche Zwecke zugelassenen, Formulierungshilfsstoff aus der Gruppe pH-Regulatoren, Farbstoffe, Verdickungsmittel, Dispergiermittel, Lösungsvermittler, Viskositätsmodifikatoren, Markierungsstoffe und Bitterstoffe, umfasst oder enthält.

Diese Formulierungshilfsstoffe können in einer Menge bis zu 5 Gew.-% in der Lösung umfasst oder enthalten sein. Diese Formulierungshilfsstoffe können zusätzlich zu den hierin beschriebenen Additiven aus der Gruppe der Lösemittel, Öle, oberflächenaktiven Stoffe und Emulgatoren eingesetzt werden und weisen keinen Effekt auf die pflanzenphysiologische Wirkung der aus einem erfindungsgemäßen Konzentrat hergestellten Spritzbrühe auf. Damit dienen diese weiteren Formulierungshilfsstoffe ausschließlich anwendungsspezifischen Anforderungen.

Besonders bevorzugt ist dabei vorgesehen, dass die Formulierungshilfsstoffe in einer Menge bis zu 4 Gew.-%, weiter bevorzugt bis zu 3 Gew.-% und besonders bevorzugt bis zu 2 Gew.-% umfasst oder enthalten sind. Sollte das erfindungsgemäße Konzentrat aufgrund von anwendungsspezifischen Anforderungen Formulierungshilfsstoffe aufweisen, so kann das Konzentrat bevorzugt mindestens 0,01 Gew.-% Formulierungshilfsstoffe, insbesondere mindestens 0,1 Gew.-%, umfassen oder enthalten (jeweils bezogen auf das Gesamtgewicht des Konzentrates).

Gemäß der vorliegenden Erfindung weist das Pflanzenwachstumskonzentrat eine Konzentration an Wirkstoff im Bereich von 100 bis 600 g/l auf. Bevorzugt umfasst oder enthält das erfindungsgemäße Konzentrat dabei mindestens 10 Gew.-% und höchstens 60 Gew.-% mindestens einer Verbindung aus der Gruppe der Acylcyanamide oder einem Salz hiervon gemäß Formel (I) oder Formel (II) (bezogen auf das Gesamtgewicht des Konzentrates). Weiter bevorzugt umfasst oder enthält das erfindungsgemäße Konzentrat dabei mindestens 20 Gew.-%, weiter bevorzugt mindestens 30 Gew.-% und ganz besonders bevorzugt mindestens 35 Gew.-% mindestens einer Verbindung aus der Gruppe der Acylcyanamide oder einem Salz hiervon gemäß Formel (I) oder Formel (II) (bezogen auf das Gesamtgewicht des Konzentrates).

Damit ist auch ein Pflanzenwachstumsregulator-Konzentrat Gegenstand der vorliegenden Erfindung, insbesondere ein Pflanzenwachstumsregulator-Konzentrat, das als Lösung, emulgierbare Lösung oder Emulsion vorliegt, das
a) 10 bis 60 Gew.-% mindestens ein Wirkstoff aus der Gruppe der Acylcyanamide oder einem Salz hiervon gemäß Formel (I) oder Formel (II), und
b) 40 bis 90 Gew.-% mindestens ein Lösemittel, insbesondere Wasser oder ein mit Wasser mischbares Lösemittel,
   und gegebenenfalls
c) 0,1 bis 12 Gew.-% mindestens ein Öl, ein Tensid und/ oder ein Emulgator,
   und gegebenenfalls
d) 0,01 bis 5 Gew.-% mindestens einen weiteren Formulierungshilfsstoff,
umfasst, wobei sich die Anteile a) bis d) auf 100 Gew.-% ergänzen, und wobei insbesondere die mindestens eine Verbindung aus der Gruppe der Acylcyanamide oder einem Salz hiervon in dem Konzentrat in gelöster Form vorliegt.

Ganz besonders bevorzugt umfasst das Pflanzenwachstumsregulator-Konzentrat gemäß der vorliegenden Erfindung
a) 30 bis 60 Gew.-% mindestens ein Wirkstoff aus der Gruppe der Acylcyanamide oder einem Salz hiervon gemäß Formel (I) oder Formel (II),
b) 40 bis 70 Gew.-% mindestens ein Lösemittel, insbesondere Wasser oder ein mit Wasser mischbares Lösemittel,
   und gegebenenfalls
c) 0,1 bis 8 Gew.-% mindestens ein Öl, ein Emulgator oder ein Tensid, und gegebenenfalls,
d) 0,01 bis 3 Gew.-% mindestens einen weiteren Formulierungshilfsstoff,
umfasst, wobei sich die Anteile a) bis d) auf 100 Gew.-% ergänzen, und wobei insbesondere die mindestens eine Verbindung aus der Gruppe der Acylcyanamide oder einem Salz hiervon in dem Konzentrat in gelöster Form vorliegt.

Es kann jedoch auch vorgesehen sein, dass das Pflanzenwachstumsregulator-Konzentrat gemäß der vorliegenden Erfindung neben den genannten Inhaltsstoffen a), b), c) und gegebenenfalls d) keine weiteren Inhaltsstoffe aufweist und somit aus den genannten Inhaltstoffen besteht.

In einer weiterhin vorteilhaften Ausführung der Erfindung, weist das erfindungsgemäße Konzentrat bei einer Temperatur von 25 °C eine Oberflächenspannung von weniger als 70 mN/m, bevorzugt von weniger als 60 mN/m, und ganz besonders bevorzugt von weniger als 40 mN/m, auf, wobei gleichzeitig oder unabhängig hiervon vorgesehen sein kann, dass das Konzentrat bei einer Temperatur von 25 °C eine Oberflächenspannung von mindestens 5 mN/m aufweist.

In einer weiterhin vorteilhaften Ausführung der Erfindung, weist das erfindungsgemäße Konzentrat bei einer Temperatur von 25 °C eine Viskosität von weniger als 1 Pa*s auf. Das erfindungsgemäße Konzentrat weist vorzugsweise eine Viskosität von weniger als 500 mPa*s, mehr bevorzugt von weniger als 100 mPa*s und noch mehr bevorzugt von weniger als 50 mPa*s bei 25 °C auf.

Mit den erfindungsgemäßen Pflanzenwachstumsregulator-Konzentraten können hohe Wirkstoffkonzentrationen bereitgestellt werden. In der Anwendung der hierin beschriebenen Wirkstoffe sind diese Konzentrationen jedoch viel zu hoch. Diese Konzentrate müssen vor ihrer Anwendung, insbesondere als Spritz-, Tauch- oder Streichlösung verdünnt werden.

In den Anwendungsversuchen hat sich gezeigt, dass die hierin beschriebenen Wirkstoffe aus der Gruppe der Acylcyanamide oder einem Salz hiervon gemäß Formel (I) oder Formel (II), insbesondere als Spritz-, Tauch- oder Streichlösung, bevorzugt in einer Konzentration im Bereich von 0,05 bis 1 mol/l eingesetzt werden können.

Weiter bevorzugt hat sich gezeigt, dass diese Wirkstoffe, insbesondere als Spritz-, Tauch- oder Streichlösung, in einer Konzentration im Bereich von 0,05 bis 0,8 mol/l, insbesondere 0,05 bis 0,6 mol/l und besonders bevorzugt 0,05 bis 0,5 mol/l eingesetzt werden können.

Weiter bevorzugt hat sich gezeigt, dass diese Wirkstoffe, insbesondere als Spritz-, Tauch- oder Streichlösung, in einer Konzentration im Bereich von 0,1 bis 1 mol, insbesondere 0,1 bis 0,8 mol/l, insbesondere 0,1 bis 0,6 mol/l und besonders bevorzugt 0,1 bis 0,5 mol/l eingesetzt werden können.

Des Weiteren ist die Verwendung des hiermit beschriebenen Pflanzenwachstumsregulator-Konzentrats oder einer aus bzw. mit diesem Konzentrat hergestellten Spritz- oder Tauchlösung zur Regulierung des generativen Wachstums von Pflanzen, insbesondere des generativen Wachstums von Nutz- und Kulturpflanzen, bevorzugt des generativen Wachstums von Fruchtgehölz, oder zur Brechung der Dormanz von Fruchtgehölz von der vorliegenden Erfindung umfasst.

Gemäß einer weiteren Ausführung ist somit auch eine Pflanzenwachstumsregulator-Spritzlösung zur Regulierung des generativen Wachstums von Pflanzen, insbesondere des generativen Wachstums von Nutz- und Kulturpflanzen, bevorzugt des generativen Wachstums von Fruchtgehölzen, oder zur Brechung der Dormanz von Fruchtgehölzen umfassend eine Lösung oder Emulsion, Gegenstand der vorliegenden Erfindung, die umfasst:
a) mindestens einen Wirkstoff aus der Gruppe der Acylcyanamide oder einem Salz hiervon gemäß Formel (I) oder Formel (II), wobei für Formel (I) und Formel (II) gilt: 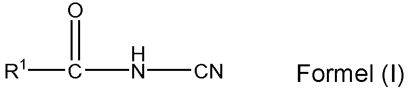 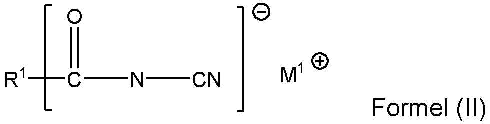 wobei für die Reste R¹, R², R³, R⁴, R⁵ und die Kationen M¹, M² unabhängig voneinander gilt:
   - R¹ =: Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, oder ein Rest Q, wobei für Q gilt:
   Q = C₁- bis C₂₀-Alkyl, C₃- bis C₁₂-Cycloalkyl, C₂- bis C₂₀-Alkenyl, C₁-bis C₂₀-Alkoxy, Aryl, Alkylaryl oder Arylalkyl, jeweils substituiert mit einem Rest der Formel (III) oder Formel (IV) 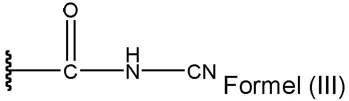 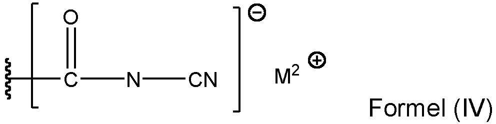
   - M¹, M² =: unabhängig voneinander Li, Na, K, ½Ca, ½Mg oder NR²R³R⁴R⁵
   - R², R³, R⁴, R⁵ =: unabhängig voneinander Wasserstoff oder C₁- bis C₂₀-Alkyl,
b) mindestens ein für landwirtschaftliche Zwecke unbedenkliches Additiv oder zugelassener Hilfsstoff aus der Gruppe der Lösemittel, Öle, oberflächenaktive Stoffe, Emulgatoren,
wobei die wässrige Lösung eine Konzentration an Wirkstoff im Bereich von 0,05 bis 1 mol/l, insbesondere 0,05 bis 0,8 mol/l, insbesondere 0,05 bis 0,6 mol/l, insbesondere 0,05 bis 0,5 mol/l, aufweist.

Somit ist in gemäß einer weiteren Ausführung auch ein Verfahren zur Regulierung des generative Wachstums von Pflanzen, insbesondere des generative Wachstum von Nutz- und Kulturpflanzen, bevorzugt des generative Wachstums von Fruchtgehölzen, oder zur Brechung der Dormanz von Fruchtgehölzen, Gegenstand der vorliegenden Erfindung, umfassend das Beaufschlagen durch Tauchen, Streichen oder Sprühen der Äste, Triebe oder Knospen der Pflanzen mit einer wässrigen Lösung umfassend mindestens einen Wirkstoff aus der Gruppe der Acylcyanamide oder einem Salz hiervon gemäß Formel (I) oder Formel (II), während der Dormanz der Pflanzen, der Nutz- und Kulturpflanzen oder der Fruchtgehölze.

Die nachfolgenden Beispiele sollen das Wesen der Erfindung näher erläutern.

### Beispiele

### Synthesebeispiele

### Beispiel A-1

### Synthese von Natriumacetylcyanamid (CAS 84946-07-6) aus festem Cyanamid

180,1 g (1,0 mol) einer 30 %igen Lösung von Natriummethylat wurden vorgelegt. Unter guter Kühlung wurden bei maximal 25 °C insgesamt 42,25 g (1,005 mol) festes Cyanamid portionsweise eingetragen. Dann wurden 134,83 g (1,82 mol) Essigsäuremethylester zugegeben und die Suspension für 10 Stunden zum Rückfluß (ca. 64 °C) erhitzt. Die Reaktionsmischung wurde auf 10 °C abgekühlt, das ausgefallene Natriumacetylcyanamid Fraktion 1 abfiltriert und bei 60 °C getrocknet. Die erhaltene Mutterlauge wurde auf das halbe Volumen eingedampft, auf 10 °C abgekühlt und die ausgefallene Fraktion 2 abfiltriert und getrocknet. Insgesamt wurden erhalten:
Fraktion 1: 75 g (71 % Ausbeute) mit 99,4 % Gehalt, Schmelzpunkt 239 °C
Fraktion 2: 19 g (18 % Ausbeute) mit 99,0 % Gehalt, Schmelzpunkt 238 °C
¹H-NMR in DMSO 1,70 ppm (s), ¹³C-NMR 180,75, 122,60, 25,26 ppm

### Beispiel A-1a

### Synthese von Natriumacetylcyanamid (CAS 84946-07-6) aus Natriumhydrogencyanamid

120 g Methanol und 88,8 g (1,20 mol) Essigsäuremethylester wurden vorgelegt. Darin wurden 64,04 g (1,0 mol) Natriumhydrogencyanamid suspendiert. Die Reaktionsmischung wurde für 10 Stunden auf 70 °C erhitzt. Dann wurde vollständig bis zur Trockene eingedampft und der erhaltene Feststoff bei 60 °C im Vakuum nachgetrocknet. Es wurden 106 g (Ausbeute 100 %) Natriumacetylcyanamid mit einem Gehalt von 98,9 % erhalten.

### Beispiel A-1b

### Synthese von Acetylcyanamid (CAS 5634-51-5) als freie NH-Säure

120 g Methanol und 88,8 g (1,20 mol) Essigsäuremethylester wurden vorgelegt. Darin wurden 64,04 g (1,0 mol) Natriumhydrogencyanamid suspendiert. Die Reaktionsmischung wurde für 10 Stunden auf 70 °C erhitzt. Dann wurde abgekühlt und weitere 500 g Methanol zugegeben. Bei 10 bis 20 °C wurden 49,0 g (0,5 mol) konzentrierte Schwefelsäure zugegeben, wobei Natriumsulfat ausfiel. Die Suspension wurde filtriert, mit Methanol nachgewaschen und die vereinigten Filtrate weitgehend komplett eingedampft. Es wurden 84 g eines Öls mit Dichte 1,100 g/cm³ und Brechungsindex n_{D} 1,425, jeweils gemessen bei 20 °C, erhalten. Die Ausbeute war quantitativ.

### Beispiel A-1c

### Synthese von Kaliumacetylcyanamid (CAS 1146597-19-4)

280,4 g (1,0 mol) einer 25 %igen Lösung von Kaliummethylat wurden vorgelegt. Unter guter Kühlung wurden bei maximal 25 °C insgesamt 42,25 g (1,005 mol) festes Cyanamid portionsweise eingetragen. Dann wurden 134,83 g (1,82 mol) Essigsäuremethylester zugegeben und die Suspension für 10 Stunden zum Rückfluß (ca. 64 °C) erhitzt. Die Reaktionsmischung wurde auf ca. das halbe Volumen eingedampft und auf 10 °C abgekühlt. Der ausgefallene Feststoff wurde abfiltriert und bei 60 °C getrocknet. Es wurden 94 g eines weißen Feststoffs mit einem N-Gehalt von 23,0 % erhalten. Die Ausbeute betrug 77 %.

### Beispiel A-2

### Synthese von Natriumformylcyanamid (CAS 71675-63-3)

909,5 g (5,0 mol) einer 29,7 %igen Natriummethylatlösung wurden vorgelegt. Unter guter Kühlung wurden bei 10 bis 20 °C insgesamt 211,05 g (5,0 mol) 99,6 %iges festes Cyanamid portionsweise eingetragen. Dann wurden 250 ml Methanol zugegeben, um eine gute Rührbarkeit zu gewährleisten. Anschließend wurden unter Kühlung 309,55 g (5,0 mol) eines 97,0 %igen Ameisensäuremethylesters zudosiert. Die Reaktionsmischung wurde auf ca. 38 °C (starker Rückfluß) erhitzt für insgesamt 18 Stunden. Dann wurde auf 10 °C abgekühlt und das ausgefallene Produkt Fraktion 1 abfiltriert und bei 60 °C getrocknet. Das Filtrat wurde zur Trockene eingedampft und nachgetrocknet (Fraktion 2). Insgesamt wurden erhalten:
Fraktion 1: 343,9 g (75 % Ausbeute) mit 30,22 % N-Gehalt, Schmelzpunkt 256 °C
Fraktion 2: 16,9 g (25 % Ausbeute) mit 30,34 % N-Gehalt, Schmelzpunkt 255 °C
¹H-NMR in DMSO: 8,43 ppm, ¹³C-NMR 171,88, 122,5 ppm

### Beispiele A-3 bis A-15

### Synthese weiterer Natriumacylcyanamide

Die weiteren Synthesen erfolgten analog Beispiel A-1a aus Natriumhydrogencyanamid. Entsprechend der jeweils gewünschten Zielverbindung wurden 1,2 mol eines Carbonsäure-methylesters in 120 Methanol vorgelegt, 64,04 g (1,0 mol) Natriumhydrogencyanamid darin suspendiert und die Reaktionsmischung für zumeist 10 Stunden zum Rückfluß (ca. 65 °C) erhitzt. Die erhaltenen Reaktionsmischungen wurden partiell eingedampft, mit 100 g t-Butylmethylether versetzt und die erhaltenen Suspensionen bei 10 °C abfiltriert. Die jeweiligen Produkte wurden mit t-Butylmethylether gewaschen und bei 60 °C getrocknet.

In den nachfolgenden Tabellen 1 und 2 wurden die jeweiligen Stoffe, ggf. Abweichungen von der obigen Standardvorschrift, Ausbeuten sowie die Charakterisierung der erhaltenen Produkte zusammengefasst.

**Tabelle 1: Charakteristische Daten erfindungsgemäßer Acylcyanamide und deren Herstellung**

| Beispiel-Nr. | Produktbezeichnung | Einsatzstoff (Carbonsäureester) | Verfahrensdetails und Ausbeute | Analytische Daten |
|---|---|---|---|---|
| A-3 | Natrium-Methoxycarbonylcyanamid CAS 51234-98-1 | Dimethylcarbonat | komplettes Eindampfen der Reaktionssuspension; | Gehalt > 98 %, Schmelzpunkt 242,5 °C |
| | | | Ausbeute 99 % | |
| A-4 | Natriumbenzoylcyanamid CAS 67998-88-3 | Benzoesäuremethylester | Ausbeute 76 % | Gehalt 100 %, Schmelzpunkt 295,6 °C |
| A-5 | Natrium-propionyl-cyanamid CAS 84945-99-3 | Propionsäuremethylester | Ausbeute 41 % | Gehalt > 98 %, Schmelzpunkt 143°C unter Zersetzung |
| A-6 | Natrium-butyrylcyanamid | Buttersäuremethylester | Ausbeute 44 % | Gehalt > 98 %, Schmelzpunkt 176-181°C |
| A-7 | Natrium-isobutyrylcyanamid | Isobuttersäuremethylester | Ausbeute 57 % | Gehalt > 96 %, enthielt ca. 4 % Methanol, Schmelzpunkt 127-133°C |
| .A-8 | Natrium-pivaloylcyanamid | 2,2-Dimethylessigsäuremethylester | 72 Std. Reaktionszeit erforderlich; | Gehalt > 98 %, Schmelzpunkt 295-300°C |
| | | | Ausbeute 70 % | |
| A-9 | Natrium-hexanoylcyanamid | Hexansäuremethylester | Ausbeute 55 % | Gehalt > 98 %, Schmelzpunkt 170-174°C |
| A-10 | Natrium-dodecanoylcyanamid CAS 93238-02-9 | Dodecansäuremethylester | Ausbeute 82 % | Gehalt > 98 %, Schmelzpunkt 155-160°C |
| A-11 | Natrium-oleylcyanamid | Ölsäuremethylester | 72 Std. Reaktionszeit erforderlich, das Produkt wurde durch Eindampfung als Öl erhalten; | Gehalt ca. 85 % |
| | | | Ausbeute quantitativ | |
| A-12 | Natrium-phenylacetylcyanamid CAS 103818-57-1 | Phenylessigsäuremethylester | Ausbeute 60 % | Gehalt 96 %, hygroskopisch, enthielt 4 % Wasser, Schmelzpunkt 183-187°C |
| A-13 | Natrium-4-methyl-benzoyl-cyanamid | 4-Methylbenzoesäure-methylester | Ausbeute 73 % | Gehalt > 98 %, Schmelzpunkt |
| | CAS 67998-89-4 | | | 340°C unter Zersetzung |
| A-14 | Dinatrium-(3-(Cyan-amidocarbonyl)-propionyl-cyanamid) CAS 88245-65-2 | Bernsteinsäuredimethylester | Einsatz 0,5 mol Bernsteinsäuredimethylester, 240 ml Methanol; | Gehalt 92 %, enthielt 8 % Natrium-3-(Methoxycarbonyl)-propionyl-cyanamid, kein Schmelzpunkt, Zersetzung ab 300°C |
| | | | Ausbeute 48 % | |
| A-15 | Dinatrium-(5-(Cyan-amidocarbonyl)-pentanoyl-cyanamid) CAS 88245-91-2 | Adipinsäuredimethylester | Einsatz 0,5 mol Adipinsäuredimethylester, 240 ml Methanol; | Gehalt 96 %, enthielt 4 % Natrium-5-(Methoxycarbonyl)-pentanoyl-cyanamid, Schmelzpunkt 272-278°C unter Zersetzung |
| | | | Ausbeute 36 % | |

**Tabelle 2: NMR-Daten erfindungsgemäßer Acylcyanamide, jeweils in d₆-DSMO gelöst**

| | ¹H-NMR (ppm) | ¹³C-NMR (ppm) |
|---|---|---|
| A-3 | 3,40 | 163,39, 122,26, 51,55 |
| A-4 | 7,90 (m, 2H), 7,36 (m, 1H), 7,28 (m, 2H) | 174,77, 138,48, 129,89, 128,14 (2C), 127,44 (2C), 122,86 |
| A-5 | 1,94 (q), 0,89 (t) | 183,59, 122,70, 31,01, 10,84 |
| A-6 | 1,92 (t), 1,42 (m), 0,80 (t) | 182,79, 122,70, 40,09, 19,39, 14,06 |
| A-7 | 2,16 (sept), 0,92 (d) | 186,96, 123,04, 36,12, 20,42 (2C) |
| A-8 | 0,97 (s) | 188,22, 123,49, 38,85, 28,64 (3C) |
| A-9 | 1,91 (t, 2H), 1,40 (m, 2H), 1,24-1,17 (m, 4H), 0,83 (t, 3H) | 182,80, 122,68, 38,03, 31,32, 25,81, 22,09, 13,98 |
| A-10 | 1,90 (t, 2H), 1,39 (m, 2H), 1,24-1,19 (m, 16H), 0,84 (t, 3H) | 182,63, 122,66, 38,08, 31,32, 29,10-29,06 (5C), 28,74, 26,14, 22,11, 13,95 |
| A-11 | 5,30 (m, 2H), 1,97 (m, 4H), 1,89 (t, 2H), 1,38 (m, 2H), 1,29-1,22 (m, 20H), 0,83 (t, 3H) | 182,49, 129,74, 129,60, 122,63, 31,30, 30,91, 29,18-28,60 (8C), 26,68, 26,61, 26,14, 22,10, 13,93 |
| A-12 | 7,24-7,20(m, 4H), 7,14 (m, 1H), 3,25 (s, 2H) | 180,57, 138,49, 129,19 (2C), 127,82 (2C), 125,61, 122,39, 45,30 |
| A-13 | 7,79 (d, 2H), 7,09 (d, 2H), 2,28 (s, 3H) | 174,85, 139,38, 135,81, 128,23 (2C), 128,04 (2C), 123,00, 20,97 |
| A-14 | 2,10 (t, 4H) | 182,91 (2C), 122,61 (2C), 34,92 (2C) |
| A-15 | 1,89 (m, 4H), 1,35 (m, 4H) | 182,85 (2C), 122,68 (2C), 38,07 (2C), 26,16 (2C) |

### Beispiele Konzentrat-Herstellung

### Beispiel B-1

### Natriumacetylcyanamid als wässrige Lösung mit Tensid

250 g Natriumacetylcyanamid aus Beispiel A-1 wurden in 600 g Wasser gelöst, dazu wurden 2,4 g des nichtionischen Tensids BreakThru^{®} OE-446 (Hersteller Evonik) gegeben und die Mischung mit Wasser auf gesamt 1000 g aufgefüllt. Es wurde eine klare Lösung erhalten.

### Beispiel B-1a

### Natriumacetylcyanamid als emulgierbare Lösung in Ethanol/Wasser/Biodiesel/Tensid

200 g Natriumacetylcyanamid aus Beispiel A-1 wurden in 600 g einer Mischung aus 80 Gew-% Ethanol und 20 Gew-% Wasser gelöst. Hierzu wurden 50 g Rapsölmethylester, 2,4 g des nichtionischen Tensids BreakThru^{®} S-240 (Hersteller Evonik) sowie 20 mg des Farbstoffs Iragon Blau ABL9-L (Hersteller BASF) gegeben. Die Mischung wurde mit Ethanol/Wasser auf 1000 g aufgefüllt. Es ergab sich eine leicht blau gefärbte, klare Lösung, die in Wasser leicht emulgierbar war.

### Beispiel B-1b

### Kaliumacetylcyanamid als Feststoff

100 g Kaliumacetylcyanamid aus Beispiel A-1c wurden mit 1 g Natriumdodecylsulfat und 100 g wasserfreiem Natriumsulfat fein verrieben. Es ergab sich ein weißer Feststoff, der in Wasser bereitwillig, mit leichter Schaumbildung, löslich war.

### Beispiel B-2

### Natriumformylcyanamid als wässrige Lösung mit Tensid

250 g Natriumformylcyanamid aus Beispiel A-2 wurden in 500 g Wasser gelöst, hierzu 2,4 g des nichtionischen Tensids BreakThru^{®} OE-446 und 20 mg des Farbstoffs Iragon Blau ABL9-L gegeben und mit Wasser auf 1000 g aufgefüllt. Es ergab sich eine klare, blau gefärbte Konzentratlösung.

### Beispiel B-3

### Natrium-propionylcyanamid als wässrige Lösung mit Tensid

250 g Natriumpropionylcyanamid aus Beispiel A-2 wurden in 500 g Wasser gelöst, hierzu 2,4 g des nichtionischen Tensids BreakThru^{®} OE-446 und 20 mg des Farbstoffs Iragon Blau ABL9-L gegeben und mit Wasser auf 1000 g aufgefüllt. Es ergab sich eine klare, blau gefärbte Konzentratlösung.

### Referenzbeispiel B-16

### Herstellung eines Konzentrats enthaltend Cyanamid

400 g reines Cyanamid wurden in 600 g Wasser gelöst. Der pH-Wert wurde mit ca. 0,1 g Phosphorsäure auf 4,2 eingestellt. Dazu wurden 10 g BreakThru^{®} OE446 und 20 mg Iragon Blau ABL9-L gegeben. Es wurde eine blau gefärbte Konzentratlösung B-16 erhalten.

### Lagerstabilität der Konzentratlösungen B-1, B-2 und B-3 im Vergleich zur B-16 (Referenz)

Die Konzentratlösungen aus B-1, B-2, B-3 und die Cyanamid enthaltende Referenzlösung B-16 wurden bei 60°C aufgestellt und nach verschiedenen Zeiträumen jeweils Proben entnommen. Diese wurden unmittelbar mittels Ionenchromatographie auf ihren Gehalt an Acylcyanamiden bzw. Cyanamid untersucht. Als Referenz diente die bei -18°C gelagerte jeweilige Ausgangslösung. Dieser wurde jeweils der Gehalt 100% zugewiesen, die Konzentrationsabnahme wurde im Verhältnis hierzu ermittelt.

**Tabelle 3: Lagerstabilität**

| Konzentrat | B-1 | B-2 | B-3 | B-16 |
|---|---|---|---|---|
| frisch hergestellt | 100% | 100% | 100% | 100% |
| nach 1 Tag bei 60°C | 99,9% | 81,6% | 99,5% | 98,6% |
| nach 2 Tagen bei 60°C | 99,5% | 66,8% | 99,3% | 97,4% |
| nach 4 Tagen bei 60°C | 99,3% | 41,7% | 98,1% | 90,0% |
| nach 7 Tagen bei 60°C | 98,3% | < 30% | 97,5% | 46,4% |
| nach 14 Tagen bei 60°C | 95,0% | < 30% | 96,6% | < 30% |

Das Ergebnis zeigt, dass die Lösungen von Natriumacetylcyanamid (B-1) und Natriumpropionylcyanamid (B-3) eine wesentlich bessere Haltbarkeit und damit eine bessere Lagerfähigkeit aufweisen, als die dem Stand der Technik entsprechende Konzentratlösung von Cyanamid (B-16). Dies ist für die Handhabung in der Landwirtschaft von entscheidendem Vorteil.

### Beispiele Gewächshausversuche

Gewächshausversuche erfolgten unter Einsatz von geschnittenen Obstbaumzweigen, die in Wassergläsern aufgestellt wurden und unter kontrollierten Bedingungen mit Temperaturregelung auf ca. 22 °C und natürlicher Beleuchtung gehalten wurden.

Es wurden Zweige von folgenden Spezies Fruchtgehölz verwendet:

### C1: Tafelapfel, Sorte Boikenapfel

Tafelapfel: *Malus domestica Sorte Boiken* erstmal 1828 in Bremen beschrieben nach Deichvogt Boiken. Apfelsorte für raue Lagen und für fast jeden Boden geeignete Streuobstsorte wobei schwere Böden und nicht zu warmen Lagen gefordert sind. Baumwuchs anfangs stark, später mittelstark. Ältere Kronen werden breitkugelig und sind locker geastet. Blüte mittelspät einsetzend und langanhaltend, Blütenblätter groß mit wenig Rosa. Ertrag spät einsetzend (Oktober) und unregelmäßig; wobei lange Haltbarkeit und Druckfestigkeit. Die Sorte zeigt geringe Atmung auf dem Lager und gewinnt mit zunehmender Reife an Qualität.

### C2: Tafelapfel, Sorte Zabergäu-Renette

Tafelapfel: *Malus domestica* Sorte Zabergäu-Renette erstmals 1885 als Zufallssämling in Hausen a.d. Zaber/ Baden-Württemberg entstanden und zunächst als 'Hausener Graue Renettte' gefüht. Keine definierte Lagensorte; benötigt schwere Böden (Lehm). Baumwuchs anfangs stark mit schräg aufrechten Leitästen, später mittelstark mit flachen Ästen. Krone breit und flachkugelig mit flachem Fruchtholz. Blätter groß, breitoval und mit klar abgesetzter Spitze. Triploide Sorte mit später und langanhaltender Blüte. Ertrag früh einsetzend, mittelhoch und etwas alternierend.

### C3: Tafelkirsche, Sorte Burlat

Tafelkirsche: *Prunus avium* Sorte Bigarreau Burlat oder Hativ Burlat ist eine starkwachsende etwas sparrig wachsender Süsskirschenbaum mit waagrecht abgehenden Seitentrieben. Die Sorte ist seit 1930 bekannt und gehört zu den wichtigsten Sorten im Erwerbsanbau. Die Blüte ist früh, gefolgt mit einer frühen Reifewoche (Ende Mai 2. Kirschsorte) und spätem Ertragsbeginn. Mittlere aber regelmäßige Erträge weisen die Sorte als Nebensorte für Früh- und Trockengebiete aus.

### C4: Weintraube, Sorte Blauburgunder

Weintraube: Vitis vinifera subsp. vinifera Sorte Blauburgunder ist eine bedeutende und hochwertig geltende Rotweinsorte die möglicherweise seit 2000 Jahren existiert. Sie wird weltweit angebaut da die Sorte hochwertige Rotweine liefert und eine ausreichende Winterfrostwiderstandsfähigkeit aufweist. Die Sorte benötigt frühe und gute Lagen mit tiefgründigen, warmen, mittelschweren und fruchtbaren Böden mit guter Wasserversorgung. Blauburgunder bringt regelmäßige, mittelhohe bis hohe Erträge. Es gibt aber eine große Anzahl an Klonen, die sich im Ertrag, der Beerengröße und der Lockerbeerigkeit unterscheiden.

Die Zweige bzw. Triebe wurden im November, ca. 1 Woche nach dem letzten Blattfall, aber noch vor dem ersten Nachtfrost, geschnitten. Zweigabschnitte wurden auf gleiche Länge gebracht, in Gruppen zu je 5 Zweigen aufgeteilt, so dass eine einheitliche Knospenzahl und Triebform je Gruppe erreicht wurde.

Die Testlösungen wurden direkt, d. h. ohne zwischenzeitliche Herstellung eines Konzentrats, hergestellt. Für jede der Test-Substanzen A-1 bis A-13 wurde eine wässrige Lösung von 0,15 mol der Testsubstanz und 0,15 g BreakThru^{®} OE-446 hergestellt und auf gesamt 500 g mit Wasser aufgefüllt. Von den Bis-Cyanamiden A-14 und A-15 wurden je 0,075 mol analog auf 500 g aufgefüllt. Diese Testlösungen (in Verbindung mit den obigen 4 Spezies/Sorten Cx) erhielten die Versuchsnummern Cx-A1 bis Cx-A15.

Als Referenzlösungen zur negativen bzw. positiven Kontrolle dienten:

| | |
|---|---|
| Cx-0: | 500 g reines Wasser (Negativ-Kontrolle) |
| Cx-0a: | 0,15 g BreakThru^{®} OE-446, mit reinem Wasser auf 500 g aufgefüllt (Negativ-Kontrolle) |
| Cx-16: | 0,15 mol (6,30 g) reines Cyanamid und 0,15 g BreakThru^{®} OE-446, mit Wasser aufgefüllt auf 500 g (Positiv-Kontrolle) |

Die Testlösungen (15 Testlösungen) wurden jeweils in eine Fotoschale gegeben, die jeweils 5 Zweige in der Lösung getaucht, soweit erforderlich mit einem Pinsel zusätzlich benetzt, so dass die gesamte Oberfläche benetzt wurde. Die Zweige wurden das auf Filtrierpapier abgelegt, so dass überschüssige Flüssigkeit abtropfen konnte, und wurden 20 Minuten antrocknen lassen. Dann wurden die jeweils 5 einheitlich behandelten Zweige in ein Glas mit reinem Wasser gestellt und wie oben beschrieben im Gewächshaus aufgestellt.

Nach festgelegten Bewertungszeitpunkten T1 bis T6 (nach 14, 16, 21, 27, 36 bzw. 56 Tagen, jeweils bestimmt nach Applikation der Testlösung "Tag 0") wurde die Knospenentwicklung eines jeden Ansatzes bewertet. Dies erfolgte mit folgender Bewertungsskala:
- Stufe 0:: Knospen unverändert
- Stufe 1:: Knospen leicht geschwollen, erste grüne Spitzen sichtbar
- Stufe 2:: stark geschwollenen, grüne Knospen
- Stufe 3:: Knospen vor dem Aufbrechen, Blatt- bzw. Blütenansatz schon sichtbar
- Stufe 4:: Blütenknospen voll entwickelt, aber noch geschlossen, weiße Blütenblätter bereits sichtbar. Im Fall der Weinrebe war Stufe 4 die Entfaltung der ersten Blätter
- Stufe 5:: Blüten voll geöffnet bzw. bei der Weinrebe Entfaltung der Blütenansätze ("Gescheine") an den voll beblätterten Trieben.

### Auswertung der Versuche

Eine dormanzbrechende Wirkung liegt vor, wenn abhängig von der zur Untersuchung stehenden Spezies (Fruchtgehölz) im Vergleich zur Negativkontrolle (Wasser oder Wasser mit Tensid) nach einer Anzahl von n Tagen (abhängig von der Spezies (Fruchtgehölz)) die Bewertungsstufe 4 erreicht oder überschritten ist. Je größer die zeitliche Differenz und/ oder die Bewertungsstufe im Vergleich zur Negativkontrolle ist, desto besser ist die dormanzbrechende Wirkung einzustufen.

| | |
|---|---|
| n (für C1, C2, C4): | 36 Tage |
| n (für C3): | 27 Tage |

Eine gute dormanzbrechende Wirkung liegt vor, wenn abhängig von der zur Untersuchung stehenden Spezies (Fruchtgehölz) im Vergleich zur Negativkontrolle (Wasser oder Wasser mit Tensid) nach einer Anzahl von n Tagen (abhängig von der Spezies (Fruchtgehölz)) die Bewertungsstufe 4 erreicht oder überschritten wird. Je größer die zeitliche Differenz und/ oder die Bewertungsstufe im Vergleich zur Negativkontrolle ist, desto besser ist die dormanzbrechende Wirkung einzustufen.

| | |
|---|---|
| n (für C1, C2, C4): | 27 Tage |
| n (für C3): | 21 Tage |

**Tabelle 3: Ergebnisse der Apfelzweige C1 zu den Bewertungszeitpunkten T1 bis T6:**

| | T1/ (14 d) | T2/ (16 d) | T3/ (21 d) | T4/ (27 d) | T5/ (36 d) | T6/ (56 d) |
|---|---|---|---|---|---|---|
| C1-0 | 0 | 0 | 0 | 1 | 1 | 1 |
| C1-0a | 0 | 0 | 0 | 1 | 1 | 1 |
| C1-A1 | 0 | 0 | 2 | 3 | 5 | 5 |
| C1-A2 | 0 | 0 | 4 | 5 | 5 | 5 |
| C1-A3 | 1 | 1 | 2 | 3 | 4 | 5 |
| C1-A4 | 1 | 1 | 1 | 2 | 3 | 4 |
| C1-A5 | 2 | 2 | 4 | 5 | 5 | 5 |
| C1-A6 | 2 | 3 | 4 | 5 | 5 | 5 |
| C1-A7 | 2 | 3 | 4 | 5 | 5 | 5 |
| C1-A8 | 0 | 0 | 2 | 4 | 4 | 4 |
| C1-A9 | 0 | 1 | 1 | 2 | 2 | 3 |
| C1-A10 | 1 | 2 | 4 | 5 | 5 | 5 |
| C1-A11 | 0 | 1 | 2 | 3 | 5 | 5 |
| C1-A12 | 0 | 1 | 2 | 2 | 5 | 5 |
| C1-A13 | 0 | 0 | 0 | 1 | 4 | 4 |
| C1-A14 | 1 | 1 | 2 | 3 | 5 | 5 |
| C1-A15 | 0 | 0 | 1 | 2 | 3 | 4 |
| C1-16 | 3 | 4 | 5 | 5 | 5 | 5 |

Die Untersuchungsergebnisse zeigen, dass 12 (80 %) der untersuchten Substanzen eine gemäß oben gegebenen Definition dormanzbrechende Wirkung haben (vgl. A1, A2, A3, A5, A6, A7, A8, A10, A11, A12, A13, A14). 6 (40 %) der untersuchten Substanzen zeigen sogar eine gute bis sehr gute dormanzbrechende Wirkung auf die untersuchte Spezies (vgl. A2, A5, A6, A7, A8, A10).

**Tabelle 4: Ergebnisse der Apfelzweige C2 zu den Bewertungszeitpunkten T1 bis T6**

| | T1/ (14 d) | T2/ (16 d) | T3/ (21 d) | T4/ (27 d) | T5/ (36 d) | T6/ (56 d) |
|---|---|---|---|---|---|---|
| C2-0 | 0 | 0 | 0 | 0 | 0 | 0 |
| C2-0a | 0 | 0 | 0 | 1 | 2 | 3 |
| C2-A1 | 0 | 0 | 1 | 3 | 5 | 5 |
| C2-A2 | 0 | 0 | 1 | 3 | 5 | 5 |
| C2-A3 | 0 | 0 | 0 | 2 | 4 | 4 |
| C2-A4 | 0 | 0 | 0 | 1 | 2 | 2 |
| C2-A5 | 0 | 0 | 0 | 1 | 3 | 4 |
| C2-A6 | 0 | 0 | 1 | 2 | 5 | 5 |
| C2-A7 | 0 | 0 | 1 | 1 | 5 | 5 |
| C2-A8 | 0 | 0 | 0 | 1 | 2 | 4 |
| C2-A9 | 0 | 1 | 4 | 5 | 5 | 5 |
| C2-A10 | 0 | 0 | 0 | 1 | 2 | 4 |
| C2-A11 | 0 | 0 | 3 | 3 | 4 | 5 |
| C2-A12 | 0 | 0 | 3 | 3 | 4 | 5 |
| C2-A13 | 0 | 0 | 1 | 3 | 3 | 5 |
| C2-A14 | 0 | 0 | 0 | 1 | 3 | 4 |
| C2-A15 | 0 | 0 | 1 | 5 | 5 | 5 |
| C2-16 | 0 | 0 | 3 | 4 | 5 | 5 |

Die Untersuchungsergebnisse zeigen, dass 9 (60 %) der zur Untersuchung stehenden Substanzen eine gemäß oben gegebenen Definition dormanzbrechende Wirkung haben (vgl. A1, A2, A3, A6, A7, A9, A11, A12, A15). 2 (13 %) der zur Untersuchung stehenden Substanzen zeigen sogar eine gute bis sehr gute dormanzbrechende Wirkung auf die untersuchte Spezies (vgl. A9, A15).

### Gesamtergebnis Apfel (C1, C2)

Abhängig von der untersuchten Apfelsorte zeigen 14 der geprüften 15 Substanzen bei mindestens einer Apfelsorte eine dormanzbrechende Wirkung. Hervorzuheben sind hierbei die Substanzen A6, A7, A9 und A15 die eine im Vergleich zur Positivkontrolle ähnlich bis gleich gute Wirkung zeigen.

**Tabelle 5: Ergebnisse der Kirschzweige C3 zu den Bewertungszeitpunkten T1 bis T6**

| | T1/ (14 d) | T2/ (16 d) | T3/ (21 d) | T4/ (27 d) | T5/ (36 d) | T6/ (56 d) |
|---|---|---|---|---|---|---|
| C3-0 | 0 | 0 | 0 | 0 | 1 | 5 |
| C3-0a | 0 | 0 | 0 | 0 | 0 | 3 |
| C3-A1 | 1 | 2 | 5 | 5 | 5 | 5 |
| C3-A2 | 1 | 2 | 5 | 5 | 5 | 5 |
| C3-A3 | 0 | 0 | 0 | 1 | 3 | 5 |
| C3-A4 | 1 | 2 | 4 | 4 | 5 | 5 |
| C3-A5 | 1 | 2 | 4 | 4 | 4 | 5 |
| C3-A6 | 1 | 1 | 3 | 5 | 5 | 5 |
| C3-A7 | 0 | 0 | 1 | 2 | 4 | 5 |
| C3-A8 | 0 | 0 | 1 | 2 | 4 | 5 |
| C3-A9 | 0 | 1 | 2 | 3 | 5 | 5 |
| C3-A10 | 1 | 2 | 4 | 4 | 4 | 5 |
| C3-A11 | 2 | 3 | 5 | 5 | 5 | 5 |
| C3-A12 | 0 | 1 | 2 | 5 | 5 | 5 |
| C3-A13 | 0 | 0 | 0 | 1 | 2 | 5 |
| C3-A14 | 0 | 1 | 4 | 5 | 5 | 5 |
| C3-A15 | 0 | 1 | 1 | 1 | 2 | 4 |
| C3-16 | 2 | 4 | 5 | 5 | 5 | 5 |

Die Untersuchungsergebnisse zeigen, dass 9 (60 %) der untersuchten Substanzen eine gemäß oben gegebenen Definition dormanzbrechende Wirkung haben(vgl. A1, A2, A4, A5, A6, A10, A11, A12, A14). 7 (47 %) der untersuchten Substanzen zeigen sogar eine gute bis sehr gute dormanzbrechende Wirkung auf die untersuchte Spezies Kirsche (vgl. A1, A2, A4, A5, A10, A11, A14). Im Unterschied zu Spezies Apfel (C1, C2) zeigt die Substanzen A4 bei der Spezies Kirsche eine gute dormanzbrechende Wirkung. Hervorzuheben ist hier zudem, dass Substanz A11 im Vergleich zu Cyanamid eine ebenbürtige Wirkung aufweist.

**Tabelle 6: Ergebnisse der Weintriebe C4 zu den Bewertungszeitpunkten T1 bis T6**

| | T1/ (14 d) | T2/ (16 d) | T3/ (21 d) | T4/ (27 d) | T5/ (36 d) | T6/ (56 d) |
|---|---|---|---|---|---|---|
| C4-0 | 0 | 0 | 0 | 0 | 2 | 5 |
| C4-0a | 0 | 0 | 0 | 0 | 1 | 5 |
| C4-A1 | 0 | 0 | 0 | 1 | 4 | 5 |
| C4-A2 | 0 | 1 | 3 | 5 | 5 | 5 |
| C4-A3 | 0 | 0 | 0 | 1 | 5 | 5 |
| C4-A4 | 0 | 0 | 0 | 3 | 5 | 5 |
| C4-A5 | 0 | 0 | 0 | 1 | 3 | 5 |
| C4-A6 | 0 | 0 | 0 | 1 | 2 | 5 |
| C4-A7 | 0 | 0 | 0 | 2 | 5 | 5 |
| C4-A8 | 0 | 0 | 0 | 1 | 4 | 5 |
| C4-A9 | 0 | 0 | 0 | 2 | 5 | 5 |
| C4-A10 | 0 | 0 | 0 | 1 | 2 | 4 |
| C4-A11 | 0 | 0 | 1 | 3 | 4 | 5 |
| C4-A12 | 0 | 0 | 1 | 3 | 4 | 4 |
| C4-A13 | 0 | 0 | 0 | 1 | 3 | 5 |
| C4-A14 | 0 | 0 | 0 | 2 | 4 | 4 |
| C4-A15 | 0 | 0 | 0 | 1 | 4 | 5 |
| C4-16 | 0 | 0 | 2 | 5 | 5 | 5 |

Die Untersuchungsergebnisse zeigen, dass 11 (73 %) der untersuchten Substanzen eine gemäß oben gegebenen Definition dormanzbrechende Wirkung haben (vgl. A1, A2, A3, A4, A7, A8, A9, A11, A12, A14, A15). 1 (7 %) der untersuchten Substanzen zeigen sogar eine gute bis sehr gute dormanzbrechende Wirkung auf die untersuchte Spezies Wein (vgl. A2). Hervorzuheben ist hier, dass Substanz A2 im Vergleich zu Cyanamid eine ebenbürtige Wirkung aufweist.

### Gesamtergebnis

Aus der Zusammenschau der Ergebnisse an den vier Fruchtgehölzarten C1 bis C4 zeigt sich, dass die erfindungsgemäßen Natriumacylcyanamide A1 bis A15 alle eine mehr oder weniger starke dormanzbrechende Wirkung im Vergleich zur Wasser-Referenz (Negativkontrolle) zeigen. Die Wirkung ist ähnlich, aber z.T. etwas schwächer bzw. leicht verzögert gegenüber der positiven Referenz Cyanamid (= Standard-Mittel gemäß Stand der Technik), dessen Effizienz Spezies-abhängig z.T. erreicht wird.

### Beispiele zur Herstellung von Spritzbrühen aus Konzentraten

### Beispiel D-1

### Herstellung einer Spritzbrühe enthaltend Natriumacetylcyanamid

10 Teile der Konzentratlösung aus Beispiel B-1 wurden mit 90 Teilen Wasser verdünnt. Es ergab sich eine wasserklare Lösung, die als Spritzbrühe verwendet wurde. Die Spritzbrühe enthielt ca. 0,24 mol des Wirkstoffs Acetylcyanamid pro Liter.

### Beispiel D-1a

### Herstellung einer Spritzbrühen-Emulsion enthaltend Natriumacetylcyanamid

8 Teile der Konzentratlösung aus Beispiel B-1a wurden in 92 Teile Wasser gegeben. Die beiden Komponenten mischten sich unter Bildung einer bläulich gefärbten, leicht trüben Emulsion. Die Spritzbrühe enthielt ca. 0,15 mol Acetylcyanamid pro Liter.

### Referenzbeispiel D-18

### Herstellung einer Spritzbrühe enthaltend Cyanamid

2,5 Teile der Konzentratlösung aus Beispiel B-18 wurden mit 97,5 Teilen Wasser versetzt, um die Referenz-Spritzbrühe D-18 zu erhalten. Die Spritzbrühe enthielt ca. 0,24 mol des Wirkstoffs Cyanamid pro Liter.

### Feldversuche

### Beispiel E1:

### Tafeltrauben USA

Drei Teilbereiche einer kommerziellen Tafeltrauben-Kultur nahe bei Madera Bundesstaat Kalifornien wurden während der Dormanzphase 45 Tage vor dem natürlichen Knospenaustrieb (11. Februar) mit folgenden Spritzbrühen behandelt:

| | |
|---|---|
| E1-0: | 600 Liter pro Hektar Wasser mit einem Zusatz von 0,1 % BreakThru^{®} OE-446 |
| E1-1: | 600 Liter pro Hektar der Spritzbrühe aus Beispiel D-1 |
| E1-18: | 600 Liter pro Hektar der Spritzbrühe aus Beispiel D-18 |

### Dadurch wurden die Rebentriebe gleichmäßig benetzt.

Am 30. und am 41. Tag nach der Applikation wurde der Knospenaustrieb zahlenmäßig erfasst.

Austrieb bedeutet, Anzahl der Knospen, die nach n Tagen mindestens ein Blatt entwickelt haben, bezogen auf die Gesamtzahl der Knospen an den Trieben zum Zeitpunkt n=0Tage (Tag der Applikation der Spritzbrühe).

**Tabelle 7: Ergebnisse Tafeltrauben USA**

| | 30 Tage | 41 Tage |
|---|---|---|
| E1-0 (Null-Referenz) | 42,5% Austrieb | 76,3% Austrieb |
| E1-1 (Erfindung) | 50,5% Austrieb | 74,0% Austrieb |
| E1-18 (Vergleich) | 55,8% Austrieb | 77,5% Austrieb |

Nach 30 Tagen war der Austrieb durch die Behandlung deutlich verfrüht, wobei die erfindungsgemäße Behandlung E1-1 nicht ganz so effektiv wie der Stand der Technik mit Cyanamid (E1-18) war. Aufgrund der speziellen Witterungsbedingungen war nach 41 Tagen der Vorsprung durch beide Wirkstoffbehandlungen wieder aufgezehrt.

### Beispiel E2:

### Tafeltrauben Spanien

Drei Teilbereiche einer Tafeltrauben-Kultur in Südspanien (Sorte Red Globe) wurden während der Dormanzphase 45 Tage vor dem natürlichen Knospenaustrieb (5. Februar) mit folgenden Spritzbrühen behandelt:

| | |
|---|---|
| E2-0: | 600 Liter pro Hektar Wasser mit einem Zusatz von 0,1% BreakThru^{®} OE-446 |
| E2-1: | 600 Liter pro Hektar der Spritzbrühe aus Beispiel D-1 |
| E2-18: | 600 Liter pro Hektar der Spritzbrühe aus Beispiel D-18 |

Dadurch wurden die Rebentriebe gleichmäßig benetzt.

Am 3. April wurde der Knospenaustrieb zahlenmäßig erfasst.

Austrieb bedeutet, Anzahl der Knospen, die nach n Tagen mindestens ein Blatt entwickelt haben, bezogen auf die Gesamtzahl der Knospen an den Trieben zum Zeitpunkt n=0 Tage (Tag der Applikation der Spritzbrühe).

**Tabelle 8: Ergebnisse Tafeltrauben Spanien**

| | |
|---|---|
| E2-0 (Null-Referenz) | 73,8% Austrieb |
| E2-1 (Erfindung) | 86,7% Austrieb |
| E2-18 (Vergleich) | 86,0% Austrieb |

Die erfindungsgemäße Behandlung mit Natriumacetylcyanamid ist somit ebenso effektiv wie der Stand der Technik einer Behandlung mit Cyanamid.

### Beispiel E3:

### Tafeltrauben Indien

Drei Teilbereiche einer Tafeltrauben-Kultur in Indien mit den Sorten Bordon AR und Hammar AR wurden während der Dormanzphase mit folgenden Spritzbrühen behandelt:

| | |
|---|---|
| E3-0: | 600 Liter pro Hektar Wasser mit einem Zusatz von 0,1% BreakThru^{®} OE-446 |
| E3-1: | 600 Liter pro Hektar der Spritzbrühe aus Beispiel D-1 |
| E3-18: | 600 Liter pro Hektar der Spritzbrühe aus Beispiel D-18 |

Dadurch wurden die Rebentriebe gleichmäßig benetzt.

Nach 30 bzw. 45 Tagen wurde der Knospenaustrieb zahlenmäßig erfasst. Austrieb bedeutet, Anzahl der Knospen, die nach n Tagen mindestens ein Blatt entwickelt haben, bezogen auf die Gesamtzahl der Knospen an den Trieben zum Zeitpunkt n=0 Tage (Tag der Applikation der Spritzbrühe).

**Tabelle 9: Ergebnisse Tafeltrauben Indien**

| | Sorte Bordon AR | | Sorte Hammar AR | |
|---|---|---|---|---|
| Auswertezeitpunkt | 30 Tage | 45 Tage | 30 Tage | 45 Tage |
| E3-0 (Null-Referenz) | 33,1% Austrieb | 58,6% Austrieb | 10,0% Austrieb | 71,2% Austrieb |
| E3-1 (Erfindung) | 36,6% Austrieb | 66,8% Austrieb | 18,0% Austrieb | 81,3% Austrieb |
| E3-18 (Vergleich) | 36,1% Austrieb | 68,1% Austrieb | 15,3% Austrieb | 81,0% Austrieb |

Die erfindungsgemäße Behandlung mit Natriumacetylcyanamid ist somit mindestens so effektiv wie der Stand der Technik einer Behandlung mit Cyanamid.

## Patentansprüche

1. Verwendung von mindestens einer Verbindung aus der Gruppe der Acylcyanamide oder einem Salz hiervon gemäß Formel (I) oder Formel (II) zur Regulierung des generativen Wachstums von Pflanzen oder zur Brechung der Dormanz von Fruchtgehölz, wobei für Formel (I) und Formel (II) gilt 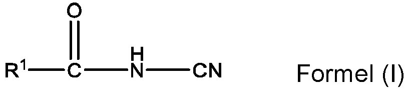 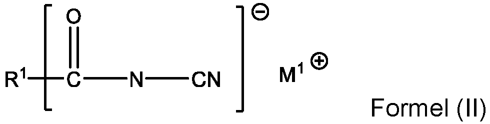 wobei für die Reste R¹, R², R³, R⁴, R⁵ und die Kationen M¹, M² unabhängig voneinander gilt:
R¹ = Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, oder ein Rest Q, wobei für Q gilt:
Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 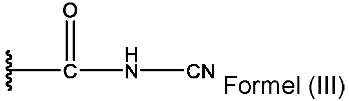 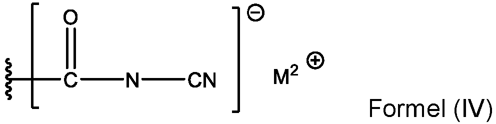
M¹, M² = unabhängig voneinander Li, Na, K, ½Ca, ½Mg oder NR²R³R⁴R⁵,
R², R³, R⁴, R⁵ = unabhängig voneinander Wasserstoff oder C₁- bis C₂₀-Alkyl.

2. Verwendung nach Anspruch 1, **dadurch gekennzeichnet, dass** mindestens eine Verbindung aus der Gruppe der Acylcyanamide oder einem Salz hiervon gemäß Formel (I) oder Formel (II) verwendet wird, wobei für die Reste R¹, R², R³, R⁴, R⁵ und die Kationen M¹, M² unabhängig voneinander gilt:
R¹ = Wasserstoff, C₁- bis C₂₀-Alkyl, C₃- bis C₁₂-Cycloalkyl, C₂- bis C₂₀-Alkenyl, C₁- bis C₂₀-Alkoxy oder ein Rest Q, wobei für Q gilt:
Q = C₁- bis C₂₀-Alkyl, C₃- bis C₁₂-Cycloalkyl, C₂- bis C₂₀-Alkenyl, C₁- bis C₂₀-Alkoxy, jeweils substituiert mit einem Rest der Formel (III) oder Formel (IV),
M¹, M² = unabhängig voneinander Li, Na, K, ½Ca, ½Mg oder NR²R³R⁴R⁵,
R², R³, R⁴, R⁵ = unabhängig voneinander Wasserstoff oder C₁- bis C₂₀-Alkyl.

3. Verwendung nach Anspruch 1, **dadurch gekennzeichnet, dass** mindestens eine Verbindung aus der Gruppe der Acylcyanamide oder einem Salz hiervon gemäß Formel (I) oder Formel (II) verwendet wird, wobei für die Reste R¹, R², R³, R⁴, R⁵ und die Kationen M¹, M² unabhängig voneinander gilt:
R¹ = Aryl, Alkylaryl oder Arylalkyl, oder ein Rest Q, wobei für Q gilt:
Q = Aryl, Alkylaryl oder Arylalkyl, jeweils substituiert mit einem Rest der Formel (III) oder Formel (IV),
M¹, M² = unabhängig voneinander Li, Na, K, ½Ca, ½Mg oder NR²R³R⁴R⁵,
R², R³, R⁴, R⁵ = unabhängig voneinander Wasserstoff oder C₁- bis C₂₀-Alkyl.

4. Verwendung nach Anspruch 1 oder 2, **dadurch gekennzeichnet, dass** mindestens eine Verbindung aus der Gruppe der Acylcyanamide oder einem Salz hiervon gemäß Formel (I) oder Formel (II) verwendet wird, wobei für den Rest R¹ und die Kationen M¹, M² unabhängig voneinander gilt:
R¹ = Wasserstoff, Methyl, Ethyl, n-Propyl, 1-Methylethyl, n-Butyl, 1-Methylpropyl, 2-Methylpropyl, n-Pentyl, n-Hexyl, n-Heptyl, n-Octyl oder ein Rest Q, wobei für Q gilt:
Q = Methyl, Ethyl, n-Propyl, 1-Methylethyl, n-Butyl, 1-Methylpropyl, 2-Methylpropyl, n-Pentyl, n-Hexyl, n-Heptyl, n-Octyl, jeweils substituiert mit einem Rest der Formel (III) oder der Formel (IV),
M¹, M² = unabhängig voneinander Na oder K.

5. Verwendung nach mindestens einem der vorgenannten Ansprüche **dadurch gekennzeichnet, dass** mindestens eine Verbindung aus der Gruppe Natrium-formylcyanamid, Natrium-acetylcyanamid, Natrium-propionylcyanamid, Natrium-n-butyrylcyanamid, Natrium-isobutyrylcyanamid, Natrium-methoxycarbonylcyanamid, Natrium-ethoxycarbonylcyanamid, Kalium-formylcyanamid, Kalium-acetylcyanamid, Kalium-propionylcyanamid, Kalium-n-butyrylcyanamid, Kalium-isobutyrylcyanamid, Kalium-methoxycarbonylcyanamid oder Kalium-ethoxycarbonylcyanamid verwendet wird.

6. Verwendung nach mindestens einem der vorgenannten Ansprüche **dadurch gekennzeichnet, dass** als Pflanzen, als Nutz- und Kulturpflanzen oder als Fruchtgehölz Pflanzen aus der Gruppe Weintraube *(Vitis vinifera),* Kiwi *(Actinidia deliciosa, Actinidia chinensis* oder *Actinidia arguta),* Heidelbeere *(Vaccinium myrtillus, Vaccinium corymbosum, Vaccinium virgatum, Vaccinium angustifolium* oder *Vaccinium myrtilloides),* Kirsche *(Prunus avium* oder *Prunus cerasus),* Pflaume oder Zwetschge *(Prunus domestica),* Apfel *(Malus domestica* oder *Malus orientalis),* Birne *(Pyrus communis, Pyrus pyraster* oder *Pyrus pyrifolia),* Quitte *(Cydonia oblonga),* Pfirsich *(Prunus persica),* Aprikose *(Prunus armeniaca),* Himbeere *(Rubus idaeus),* Kaki *(Diospyrus kaki),* Feige *(Ficus carica)* oder deren Kreuzungsprodukte oder deren Kultursorten behandelt werden.

7. Pflanzenwachstumsregulator-Konzentrat zur Regulierung des generativen Wachstums von Pflanzen oder zur Brechung der Dormanz von Fruchtgehölz, umfassend
a) mindestens einen Wirkstoff aus der Gruppe der Acylcyanamide oder einem Salz hiervon gemäß Formel (I) oder Formel (II), wobei für Formel (I) und Formel (II) gilt: 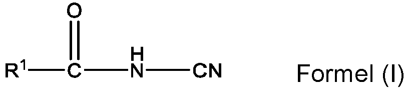 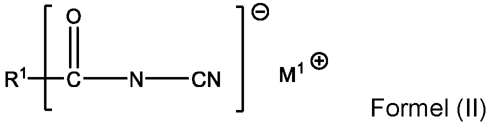 wobei für die Reste R¹, R², R³, R⁴, R⁵ und die Kationen M¹, M² unabhängig voneinander gilt:
R¹ = Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, oder ein Rest Q, wobei für Q gilt:
Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 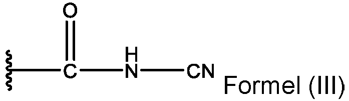 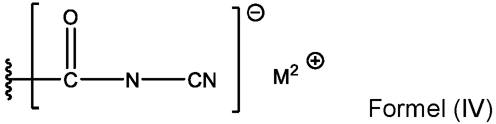
M¹, M² = unabhängig voneinander Li, Na, K, ½Ca, ½Mg oder NR²R³R⁴R⁵,
R², R³, R⁴, R⁵ = unabhängig voneinander Wasserstoff oder C₁- bis C₂₀-Alkyl,
b) mindestens ein für landwirtschaftliche Zwecke unbedenkliches oder zugelassenes Additiv aus der Gruppe der Lösemittel, Öle, oberflächenaktive Stoffe oder Emulgatoren,
wobei das Konzentrat eine Konzentration an Wirkstoff gemäß a) im Bereich von 200 bis 600 g/l aufweist.

8. Pflanzenwachstumsregulator-Konzentrat zur Regulierung des generativen Wachstums von Pflanzen oder zur Brechung der Dormanz von Fruchtgehölz, umfassend
a) mindestens einen Wirkstoff aus der Gruppe der Acylcyanamide oder einem Salz hiervon gemäß Formel (I) oder Formel (II), wobei für Formel (I) und Formel (II) gilt: 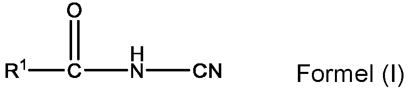 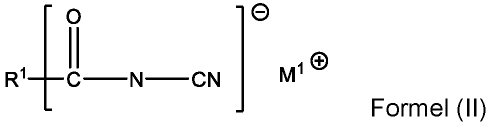 wobei für die Reste R¹, R², R³, R⁴, R⁵ und die Kationen M¹, M² unabhängig voneinander gilt:
R¹ = Wasserstoff,
ein Alkylrest ausgewählt aus der Gruppe Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, 2-Ethylpropyl oder n-Hexyl,
ein Alkenylrest ausgewählt aus der Gruppe Ethenyl, Propenyl, Butenyl, Pentenyl, Hexenyl, Butadienyl, Pentadienyl Hexadienyl oder Hexatrienyl,
C₃- bis C₁₂-Cycloalkyl, C₁- bis C₂₀-Alkoxy, Aryl, Alkylaryl oder Arylalkyl, oder ein Rest Q, wobei für Q gilt:
Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 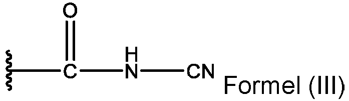 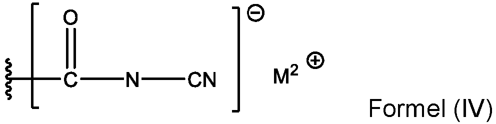
M¹, M² = unabhängig voneinander Li, Na, K, ½Ca, ½Mg oder NR²R³R⁴R⁵,
R², R³, R⁴, R⁵ = unabhängig voneinander Wasserstoff oder C₁- bis C₂₀-Alkyl,
b) mindestens ein für landwirtschaftliche Zwecke unbedenkliches oder zugelassenes Additiv aus der Gruppe der Lösemittel, Öle, oberflächenaktive Stoffe oder Emulgatoren,
wobei das Konzentrat eine Konzentration an Wirkstoff gemäß a) im Bereich von 100 bis 600 g/l aufweist.

9. Pflanzenwachstumsregulator-Konzentrat nach Anspruch 7, **dadurch gekennzeichnet, dass** das Konzentrat
a) mindestens einen Wirkstoff aus der Gruppe der Acylcyanamide oder einem Salz hiervon gemäß Formel (I) oder Formel (II) umfasst, wobei für die Reste R¹, R², R³, R⁴, R⁵ und die Kationen M¹, M² unabhängig voneinander gilt:
R¹ = Wasserstoff, C₁- bis C₂₀-Alkyl, C₃- bis C₁₂-Cycloalkyl, C₂- bis C₂₀-Alkenyl, C₁- bis C₂₀-Alkoxy oder ein Rest Q, wobei für Q gilt:
Q = C₁- bis C₂₀-Alkyl, C₃- bis C₁₂-Cycloalkyl, C₂- bis C₂₀-Alkenyl, C₁- bis C₂₀-Alkoxy, jeweils substituiert mit einem Rest der Formel (III) oder Formel (IV),
M¹, M² = unabhängig voneinander Li, Na, K, ½Ca, ½Mg oder NR²R³R⁴R⁵,
R², R³, R⁴, R⁵ = unabhängig voneinander Wasserstoff oder C₁- bis C₂₀-Alkyl.

10. Pflanzenwachstumsregulator-Konzentrat nach mindestens einem der vorgenannten Ansprüche 7 bis 9, **dadurch gekennzeichnet, dass** das Konzentrat eine Lösung, eine Emulsion oder eine emulgierbare Lösung ist, die als Lösemittel ein Lösemittel aus der Gruppe Wasser, Ethanol, Isopropanol, Glykol, Polyglykol, Glycerin oder Mischungen dieser Lösemittel umfasst.

11. Pflanzenwachstumsregulator-Konzentrat nach mindestens einem der vorgenannten Ansprüche 7 bis 10, **dadurch gekennzeichnet, dass** das Konzentrat eine Lösung, eine Emulsion oder eine emulgierbare Lösung ist, die als Öl ein Öl aus der Gruppe der Pflanzenöle umfasst.

12. Pflanzenwachstumsregulator-Konzentrat nach mindestens einem der vorgenannten Ansprüche 7 bis 11, **dadurch gekennzeichnet, dass** das Konzentrat eine Lösung, eine Emulsion oder eine emulgierbare Lösung ist, die als oberflächenaktiven Stoff einen oberflächenaktiven Stoff aus der Gruppe der nichtionischen Tenside umfasst.

13. Pflanzenwachstumsregulator-Konzentrat nach mindestens einem der vorgenannten Ansprüche 7 bis 12, **dadurch gekennzeichnet, dass** das Konzentrat als oberflächenaktiven Stoff ein Tensid enthaltend eine oder mehrere Verbindungen aus der Gruppe der Ethoxylate gemäß Formel (VII), der Fettalkoholglucoside gemäß Formel (VIII) oder Mischungen hiervon, umfasst, wobei für Formel (VII) und (VIII) gilt,
R¹¹-O-(CH₂CH₂O)ₙ-H Formel (VII) 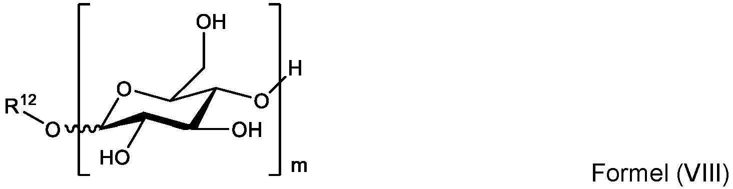
wobei für die Reste R¹¹, R¹² und die Indizes n, m gleichzeitig oder unabhängig gilt:
R¹¹ = eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
R¹² = eine lineare oder verzweigte Alkyl- oder Alkenylgruppe mit 6 bis 24 Kohlenstoffatomen,
n = eine Zahl von 2 bis 20,
m = eine Zahl von 1 bis 5.

14. Pflanzenwachstumsregulator-Konzentrat nach mindestens einem der vorgenannten Ansprüche 7 bis 13, **dadurch gekennzeichnet, dass** das Konzentrat eine Lösung, eine Emulsion oder eine emulgierbare Lösung ist, die als Emulgator einen Emulgator aus der Gruppe der nichtionischen Öl-in-Wasser-Emulgatoren umfasst.

15. Pflanzenwachstumsregulator-Konzentrat nach mindestens einem der vorgenannten Ansprüche 7 bis 14, **dadurch gekennzeichnet, dass** das Konzentrat weiterhin mindestens einen für landwirtschaftliche Zwecke zugelassenen Formulierungshilfsstoff aus der Gruppe der pH-Regulatoren, Farbstoffe, Verdickungsmittel, Dispergiermittel, Lösungsvermittler, Viskositätsmodifikatoren, Markierungsstoffe und Bitterstoffe umfasst.

16. Pflanzenwachstumsregulator-Konzentrat gemäß Anspruch 8, **dadurch gekennzeichnet, dass** das Konzentrat umfasst:
a) mindestens einen Wirkstoff aus der Gruppe Natrium-formylcyanamid, Natrium-acetylcyanamid, Natrium-propionylcyanamid, Natrium-n-butyrylcyanamid, Natrium-isobutyrylcyanamid, Natrium-methoxycarbonylcyanamid, Natrium-ethoxycarbonylcyanamid, Kalium-formylcyanamid, Kalium-acetylcyanamid, Kalium-propionylcyanamid, Kalium-n-butyrylcyanamid, Kalium-isobutyrylcyanamid, Kalium-methoxycarbonylcyanamid oder Kalium-ethoxycarbonylcyanamid,
b) mindestens ein für landwirtschaftliche Zwecke unbedenkliches oder zugelassenes Additiv aus der Gruppe der Lösemittel, und
c) mindestens ein für landwirtschaftliche Zwecke unbedenkliches oder zugelassenes Additiv aus der Gruppe der Öle, oberflächenaktive Stoffe oder Emulgatoren,
wobei das Konzentrat eine Konzentration an Wirkstoff im Bereich von 100 bis 600 g/l aufweist.

17. Verfahren zur Regulierung des generativen Wachstums von Pflanzen oder zur Brechung der Dormanz von Fruchtgehölz umfassend das Beaufschlagen durch Tauchen, Streichen oder Sprühen der Äste, Triebe oder Knospen der Pflanzen mit einer wässrigen Lösung umfassend mindestens einen Wirkstoff aus der Gruppe der Acylcyanamide oder einem Salz hiervon gemäß Formel (I) oder Formel (II), während der Dormanz der Pflanzen, wobei für Formel (I) und Formel (II) gilt 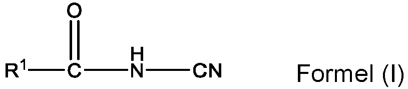 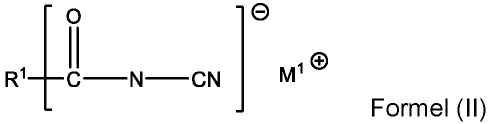 wobei für die Reste R¹, R², R³, R⁴, R⁵ und die Kationen M¹, M² unabhängig voneinander gilt:
R¹ = Wasserstoff, C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, oder ein Rest Q, wobei für Q gilt:
Q = C₁- bis C₂₀-Alkyl, C₃- bis C₁₂-Cycloalkyl, C₂- bis C₂₀-Alkenyl, C₁- bis C₂₀-Alkoxy, Aryl, Alkylaryl oder Arylalkyl, jeweils substituiert mit einem Rest der Formel (III) oder Formel (IV) 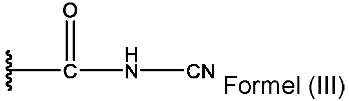 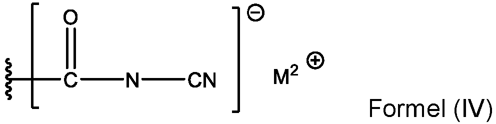
M¹, M² = unabhängig voneinander Li, Na, K, ½Ca, ½Mg oder NR²R³R⁴R⁵,
R², R³, R⁴, R⁵ = C₂₀-Alkyl. unabhängig voneinander Wasserstoff oder C₁- bis

## Claims

1. Use of at least one compound from the group of acylcyanamides or a salt thereof according to formula (I) or formula (II) for regulating the generative growth of plants or for breaking the dormancy of fruit trees, wherein the following applies to formula (I) and formula (II) 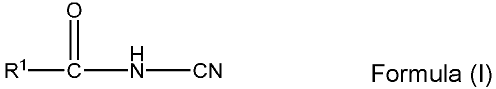 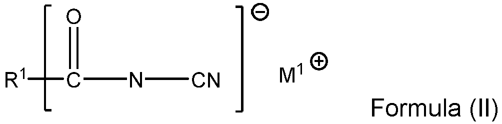 wherein radicals R¹, R², R³, R⁴, R⁵ and cations M¹, M² independently of one another mean:
R¹ = hydrogen, C₁ to C₂₀ alkyl, C₃ to C₁₂ cycloalkyl, C₂ to C₂₀ alkenyl, C₁ to C₂₀ alkoxy, aryl, alkylaryl or arylalkyl, or a radical Q, wherein Q is:
Q = C₁ to C₂₀ alkyl, C₃ to C₁₂ cycloalkyl, C₂ to C₂₀ alkenyl, C₁ to C₂₀ alkoxy, aryl, alkylaryl or arylalkyl, each substituted by a radical of formula (III) or formula (IV) 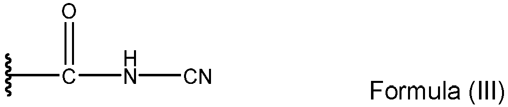 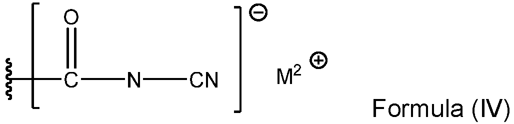
M¹, M² = independently of one another Li, Na, K, ½Ca, ½Mg, or NR²R³R⁴R⁵,
R², R³, R⁴, R⁵ = independently of one another hydrogen or C₁ to C₂₀ alkyl.

2. Use according to claim 1, **characterized in that** at least one compound from the group of acylcyanamides or a salt thereof according to formula (I) or formula (II) is used, wherein radicals R¹, R², R³, R⁴, R⁵ and cations M¹, M² independently of one another mean:
R¹ = hydrogen, C₁ to C₂₀ alkyl, C₃ to C₁₂ cycloalkyl, C₂ to C₂₀ alkenyl, C₁ to C₂₀ alkoxy or a radical Q, wherein Q is:
Q = C₁ to C₂₀ alkyl, C₃ to C₁₂ cycloalkyl, C₂ to C₂₀ alkenyl, C₁ to C₂₀ alkoxy, each substituted by a radical of formula (III) or formula (IV),
M¹, M² = independently of one another Li, Na, K, ½Ca, ½Mg, or NR²R³R⁴R⁵,
R², R³, R⁴, R⁵ = independently of one another hydrogen or C₁ to C₂₀ alkyl.

3. Use according to claim 1, **characterized in that** at least one compound from the group of acylcyanamides or a salt thereof according to formula (I) or formula (II) is used, wherein radicals R¹, R², R³, R⁴, R⁵ and cations M¹, M² independently of one another mean:
R¹ = aryl, alkylaryl or arylalkyl, or a radical Q, wherein Q is:
Q = aryl, alkylaryl or arylalkyl, each substituted by a radical of formula (III) or formula (IV),
M¹, M² = independently of one another Li, Na, K, ½Ca, ½Mg, or NR²R³R⁴R⁵,
R², R³, R⁴, R⁵ = independently of one another hydrogen or C₁ to C₂₀ alkyl.

4. Use according to claim 1 or 2, **characterized in that** at least one compound from the group of acylcyanamides or a salt thereof according to formula (I) or formula (II) is used, wherein radical R¹ and cations M¹, M² independently of one another mean:
R¹ = hydrogen, methyl, ethyl, n-propyl, 1-methylethyl, n-butyl, 1-methylpropyl, 2-methylpropyl, n-pentyl, n-hexyl, n-heptyl, n-octyl or a radical Q, wherein Q is:
Q = methyl, ethyl, n-propyl, 1-methylethyl, n-butyl, 1-methylpropyl, 2-methylpropyl, n-pentyl, n-hexyl, n-heptyl, n-octyl, each substituted by a radical of formula (III) or formula (IV),
M¹, M² = independently of one another Na or K.

5. Use according to at least one of the preceding claims, **characterized in that** at least one compound selected from the group consisting of sodium formylcyanamide, sodium acetylcyanamide, sodium propionylcyanamide, sodium n-butyrylcyanamide, sodium isobutyrylcyanamide, sodium methoxycarbonylcyanamide, sodium ethoxycarbonylcyanamide, potassium formylcyanamide, potassium acetylcyanamide, potassium propionylcyanamide, potassium n-butyrylcyanamide, potassium isobutyrylcyanamide, potassium methoxycarbonylcyanamide or potassium ethoxycarbonylcyanamide is used.

6. Use according to at least one of the preceding claims, **characterized in that** as plants, as crops and cultivated plants or as fruit trees, plants selected from the group consisting of grape *(Vitis vinifera),* kiwi *(Actinidia deliciosa, Actinidia chinensis,* or *Actinidia arguta),* blueberry *(Vaccinium myrtillus, Vaccinium corymbosum, Vaccinium virgatum, Vaccinium angustifolium* or *Vaccinium myrtilloides),* cherry *(Prunus avium* or *Prunus cerasus),* plum or damson *(Prunus domestica),* apple *(Malus domestica* or *Malus orientalis),* pear *(Pyrus communis, Pyrus pyraster* or *Pyrus pyrifolia),* quince *(Cydonia oblonga),* peach *(Prunus persica),* apricot *(Prunus armeniaca),* raspberry *(Rubus idaeus),* persimmon *(Diospyrus kaki),* fig *(Ficus carica)* or their cross products or cultivars are treated.

7. Plant growth regulator concentrate for regulating the generative growth of plants or for breaking the dormancy of fruit trees comprising
a) at least one active ingredient from the group of acylcyanamides or a salt thereof according to formula (I) or formula (II), wherein the following applies to formula (I) and formula (II): 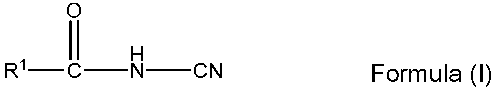 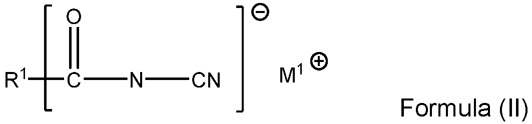 wherein radicals R¹, R², R³, R⁴, R⁵ and cations M¹, M² independently of one another mean:
R¹ = hydrogen, C₁ to C₂₀ alkyl, C₃ to C₁₂ cycloalkyl, C₂ to C₂₀ alkenyl, C₁ to C₂₀ alkoxy, aryl, alkylaryl or arylalkyl, or a radical Q, wherein Q is:
Q = C₁ to C₂₀ alkyl, C₃ to C₁₂ cycloalkyl, C₂ to C₂₀ alkenyl, C₁ to C₂₀ alkoxy, aryl, alkylaryl or arylalkyl, each substituted by a radical of formula (III) or formula (IV) 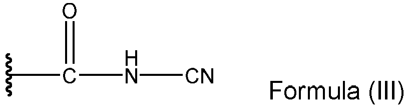 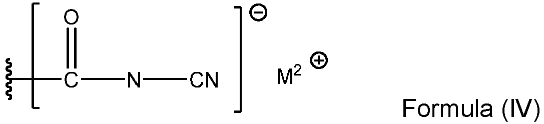
M¹, M² = independently of one another Li, Na, K, ½Ca, ½Mg, or NR²R³R⁴R⁵,
R², R³, R⁴, R⁵ = independently of one another hydrogen or C₁ to C₂₀ alkyl,
b) at least one additive from the group of solvents, oils, surfactants or emulsifiers that is safe or approved for agricultural purposes,
wherein the concentrate having a concentration of active ingredient according to a) in the range of 200 to 600 g/l.

8. Plant growth regulator concentrate for regulating the generative growth of plants or for breaking the dormancy of fruit trees comprising
a) at least one active ingredient from the group of acylcyanamides or a salt thereof according to formula (I) or formula (II), wherein the following applies to formula (I) and formula (II): 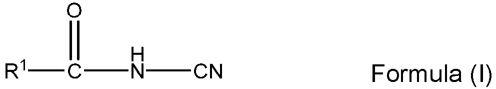 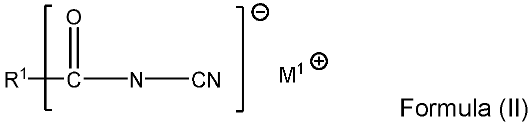 wherein radicals R¹, R², R³, R⁴, R⁵ and cations M¹, M² independently of one another mean:
R¹ = hydrogen,
an alkyl radical selected from the group methyl, ethyl, n-propyl, 1-methylethyl, n-butyl, 1-methylpropyl, 2-methylpropyl, 1,1-dimethylethyl, n-pentyl, 1-methylbutyl, 2-methylbutyl, 3-methylbutyl, 1,1-dimethylpropyl, 1,2-dimethylpropyl, 2,2-dimethylpropyl, 1-ethylpropyl, 2-ethylpropyl or n-hexyl,
an alkylene radical selected from the group ethenyl, propenyl, butenyl, pentenyl, hexenyl, butadienyl, pentadienyl, hexadienyl or hexatrienyl,
C₃ to C₁₂ cycloalkyl, C₁ to C₂₀ alkoxy, aryl, alkylaryl or arylalkyl, or a radical Q, wherein Q is:
Q = C₁ to C₂₀ alkyl, C₃ to C₁₂ cycloalkyl, C₂ to C₂₀ alkenyl, C₁ to C₂₀ alkoxy, aryl, alkylaryl or arylalkyl, each substituted by a radical of formula (III) or formula (IV) 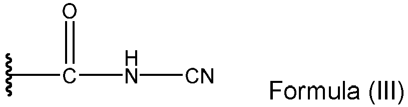 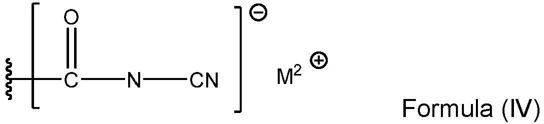
M¹, M² = independently of one another Li, Na, K, ½Ca, ½Mg, or NR²R³R⁴R⁵,
R², R³, R⁴, R⁵ = independently of one another hydrogen or C₁ to C₂₀ alkyl,
b) at least one additive from the group of solvents, oils, surfactants or emulsifiers that is safe or approved for agricultural purposes,
wherein the concentrate having a concentration of active ingredient according to a) in the range of 100 to 600 g/l.

9. Plant growth regulator concentrate according to claim 7, **characterized in that** the concentrate
a) comprises at least one active ingredient selected from the group consisting of acylcyanamides or a salt thereof according to formula (I) or formula (II), wherein radicals R¹, R², R³, R⁴, R⁵ and cations M¹, M² independently of one another mean:
R¹ = hydrogen, C₁ to C₂₀ alkyl, C₃ to C₁₂ cycloalkyl, C₂ to C₂₀ alkenyl, C₁ to C₂₀ alkoxy or a radical Q, wherein Q is:
Q = C₁ to C₂₀ alkyl, C₃ to C₁₂ cycloalkyl, C₂ to C₂₀ alkenyl, C₁ to C₂₀ alkoxy, each substituted by a radical of formula (III) or formula (IV),
M¹, M² = independently of one another Li, Na, K, ½Ca, ½Mg, or NR²R³R⁴R⁵,
R², R³, R⁴, R⁵ = independently of one another hydrogen or C₁ to C₂₀ alkyl.

10. Plant growth regulator concentrate according to at least one of the preceding claims 7 to 9, **characterized in that** the concentrate is a solution, an emulsion or an emulsifiable solution comprising as solvent a solvent selected from the group consisting of water, ethanol, isopropanol, glycol, polyglycol, glycerol or mixtures of these solvents.

11. Plant growth regulator concentrate according to at least one of the preceding claims 7 to 10, **characterized in that** the concentrate is a solution, an emulsion or an emulsifiable solution comprising as oil an oil from the group of plant oils.

12. Plant growth regulator concentrate according to at least one of the preceding claims 7 to 11, **characterized in that** the concentrate is a solution, an emulsion or an emulsifiable solution comprising as surfactant a surfactant selected from the group consisting of nonionic surfactants.

13. Plant growth regulator concentrate according to at least one of the preceding claims 7 to 12, **characterized in that** the concentrate comprises as surfactant a surfactant containing one or more compounds selected from the group consisting of ethoxylates according to formula (VII), fatty alcohol glucosides according to formula (VIII), or mixtures thereof, wherein the following applies to formula (VII) and formula (VIII),
R¹¹-O- (CH₂CH₂O)ₙ-H Formula (VII) 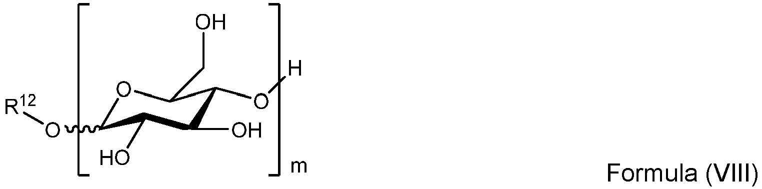
wherein radicals R¹¹, R¹² and indices n, m simultaneously or independently mean:
R¹¹ = a linear or branched alkyl or alkenyl group having 6 to 24 carbon atoms, a partially or fully fluorinated alkyl group having 6 to 18 carbon atoms, a phenyl group, an alkyl-substituted phenyl group, a mono- or polyfunctional siloxane group,
R¹² = a linear or branched alkyl or alkenyl group containing 6 to 24 carbon atoms,
n = a number from 2 to 20,
m = a number from 1 to 5.

14. Plant growth regulator concentrate according to at least one of the preceding claims 7 to 13, **characterized in that** the concentrate is a solution, an emulsion or an emulsifiable solution comprising as emulsifier an emulsifier selected from the group consisting of nonionic oil-in-water emulsifiers.

15. Plant growth regulator concentrate according to at least one of the preceding claims 7 to 14, **characterized in that** the concentrate further comprises at least one formulation adjuvant approved for agricultural use selected from the group consisting of pH regulators, colorants, thickeners, dispersants, solubilizers, viscosity modifiers, labeling agents and bittering agents.

16. Plant growth regulator concentrate according to claim 8, **characterized in that** the concentrate comprises:
a) at least one active ingredient from the group consisting of sodium formylcyanamide, sodium acetylcyanamide, sodium propionylcyanamide, sodium n-butyrylcyanamide, sodium isobutyrylcyanamide, sodium methoxycarbonylcyanamide, sodium ethoxycarbonylcyanamide, potassium formylcyanamide, potassium acetylcyanamide, potassium propionylcyanamide, potassium n-butyrylcyanamide, potassium isobutyrylcyanamide, potassium methoxycarbonylcyanamide or potassium ethoxycarbonylcyanamide,
b) at least one additive from the group of solvents that is safe or approved for agricultural purposes, and
c) at least one additive from the group of oils, surfactants or emulsifiers that is safe or approved for agricultural purposes,
wherein the concentrate having a concentration of active ingredient in the range of 100 to 600 g/l.

17. A method for regulating the generative growth of plants or for breaking the dormancy of fruit trees comprising application by dipping, brushing or spraying of the branches, sprouts or buds of the plants with an aqueous solution comprising at least one active ingredient from the group of acylcyanamides or a salt thereof according to formula (I) or formula (II), during dormancy of the plants, wherein the following applies to formula (I) and formula (II) 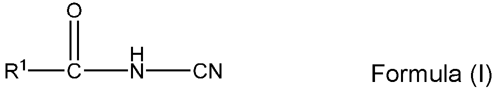 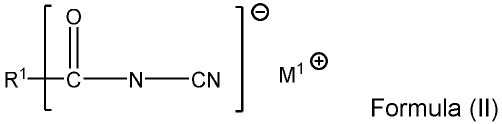 wherein radicals R¹, R², R³, R⁴, R⁵ and cations M¹, M² independently of one another mean:
R¹ = hydrogen, C₁ to C₂₀ alkyl, C₃ to C₁₂ cycloalkyl, C₂ to C₂₀ alkenyl, C₁ to C₂₀ alkoxy, aryl, alkylaryl or arylalkyl, or a radical Q, wherein Q is:
Q = C₁ to C₂₀ alkyl, C₃ to C₁₂ cycloalkyl, C₂ to C₂₀ alkenyl, C₁ to C₂₀ alkoxy, aryl, alkylaryl or arylalkyl, each substituted by a radical of formula (III) or formula (IV) 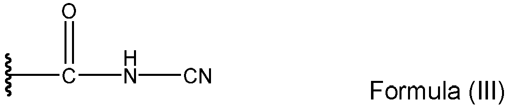 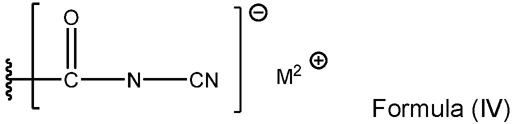
M¹, M² = independently of one another Li, Na, K, ½Ca, ½Mg, or NR²R³R⁴R⁵,
R², R³, R⁴, R⁵ = independently of one another hydrogen or C₁ to C₂₀ alkyl.

## Revendications

1. Utilisation d'au moins un composé du groupe des acylcyanamides ou d'un sel de ceux-ci selon la formule (I) ou la formule (II) pour réguler la croissance générative des plantes ou pour rompre la dormance des arbres fruitiers, où pour la formule (I) et la formule (II) : 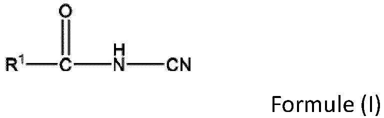 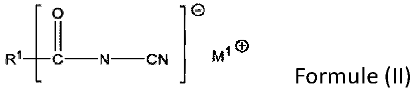 où, pour les radicaux R¹, R², R³, R⁴, R⁵ et les cations M¹, M², indépendamment les uns des autres, les relations suivantes s'appliquent :
R¹ = hydrogène, alkyle en C₁ à C₂₀, cycloalkyle en C₃ à C₁₂, alcényle en C₂ à C₂₀, alcoxy en C₁ à C₂₀, aryle, alkylaryle ou arylalkyle, ou un radical Q, où Q représente :
Q = alkyle en C₁ à C₂₀, cycloalkyle en C₃ à C₁₂, alcényle en C₂ à C₂₀, alcoxy en C₁ à C₂₀, aryle, alkylaryle ou arylalkyle, chacun substitué par un radical de formule (III) ou formule (IV) 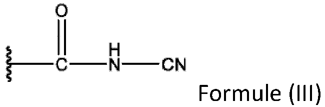 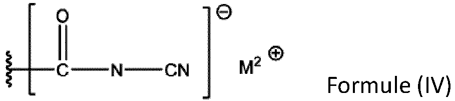
M¹, M² = indépendamment l'un de l'autre Li, Na, K, 1/2Ca, 1/2Mg ou NR²R³R⁴R⁵, R², R³, R⁴, R⁵ = indépendamment l'un de l'autre hydrogène ou alkyle en C₁ à C₂₀.

2. Utilisation selon la revendication 1, **caractérisée en ce qu'**au moins un composé du groupe des acylcyanamides ou un sel de ceux-ci selon la formule (I) ou la formule (II) est utilisé, où pour les radicaux R¹, R², R³, R⁴, R⁵ et les cations M¹, M², les relations suivantes s'appliquent indépendamment les unes des autres :
R1 = hydrogène, alkyle en C₁ à C₂₀, cycloalkyle en C₃ à C₁₂, alcényle en C₂ à C₂₀, alcoxy en C₁ à C₂₀ ou un radical Q, où Q représente :
Q = alkyle en C₁ à C₂₀, cycloalkyle en C₃ à C₁₂, alcényle en C₂ à C₂₀, alcoxy en C₁ à C₂₀, chacun substitué par un radical de formule (III) ou (IV),
M¹, M² = indépendamment l'un de l'autre Li, Na, K, 1/2Ca, 1/2Mg ou NR²R³R⁴R⁵, R¹, R², R³, R⁴, R⁵ = indépendamment l'un de l'autre hydrogène ou alkyle en C₁ à C₂₀.

3. Utilisation selon la revendication 1, **caractérisée en ce qu'**au moins un composé du groupe des acylcyanamides ou un sel de ceux-ci selon la formule (I) ou la formule (II) est utilisé, où pour les radicaux R¹, R², R³, R⁴, R⁵ et les cations M¹, M², indépendamment les uns des autres les relations suivantes s'appliquent:
R¹ = aryle, alkylaryle ou arylalkyle, ou un radical Q, où Q représente :
Q = aryle, alkylaryle ou arylalkyle, chacun substitué par un radical de formule (III) ou de formule (IV),
M¹, M²= indépendamment l'un de l'autre, Li, Na, K, 1/2Ca, 1/2Mg ou NR²R³R⁴R⁵, R², R³, R⁴, R⁵ = indépendamment les uns des autres, hydrogène ou alkyle en en C₁ à C₂₀.

4. Utilisation selon la revendication 1 ou 2, **caractérisée en ce qu'**au moins un composé du groupe des acylcyanamides ou un sel de ceux-ci selon la formule (I) ou la formule (II) est utilisé, où pour le radical R¹ et les cations M¹, M², indépendamment les uns des autres les relations suivantes s'appliquent:
R1 = hydrogène, méthyle, éthyle, n-propyle, 1-méthyléthyle, n-butyle, 1-méthylpropyle, 2-méthylpropyle, n-pentyle, n-hexyle, n-heptyle, n-octyle ou un radical Q, où Q représente :
Q = méthyle, éthyle, n-propyle, 1-méthyléthyle, n-butyle, 1-méthylpropyle, 2-méthylpropyle, n-pentyle, n-hexyle, n-heptyle, n-octyle, chacun substitué par un radical de formule (III) ou de formule (IV),
M¹, M²= indépendamment l'un de l'autre Na ou K.

5. Utilisation selon au moins l'une des revendications précédentes, **caractérisée en ce qu'**au moins un composé du groupe sodium-formylcyanamide, sodium-acétylcyanamide, sodium-propionylcyanamide, sodium-n-butyrylcyanamide, sodium-isobutyrylcyanamide, soidum-méthoxycarbonylcyanamide, sodium-éthoxycarbonylcyanamide, potassium-formylcyanamide, potassium-acétylcyanamide, potassium-propionylcyanamide, potassium-n-butyrylcyanamide, potassium-isobutyrylcyanamide, potassium-méthoxycarbonylcyanamide ou potassium-éthoxycarbonylcyanamide est utilisé.

6. Utilisation selon au moins l'une des revendications précédentes, **caractérisée en ce que** les plantes, les plantes utiles et cultivées ou les arbres fruitiers sont des plantes du groupe comprenant le raisin *(Vitis vinifera),* le kiwi *(Actinidia deliciosa, Actinidia chinensis* ou *Actinidia arguta),* myrtille *(Vaccinium myrtillus, Vaccinium corymbosum, Vaccinium virgatum, Vaccinium angustifolium* ou *Vaccinium myrtilloides),* cerise *(Prunus avium* ou *Prunus cerasus),* prune ou quetsche *(Prunus domestica),* pomme *(Malus domestica* ou *Malus orientalis),* poire *(Pyrus communis, Pyrus pyraster* ou *Pyrus pyrifolia),* coing *(Cydonia oblonga),* pêche *(Prunus persica),* abricot *(Prunus armeniaca),* framboise *(Rubus idaeus),* le kaki *(Diospyrus kaki),* la figue *(Ficus carica)* ou leurs hybrides ou leurs variétés cultivées.

7. Concentré de régulateur de croissance de plantes destiné à réguler la croissance générative des végétaux ou à rompre la dormance des arbres fruitiers, comprenant
a) au moins une substance active du groupe des acylcyanamides ou un sel de ceux-ci selon la formule (I) ou la formule (II), où, pour la formule (I) et la formule (II) : 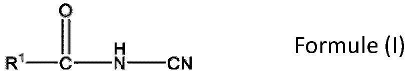 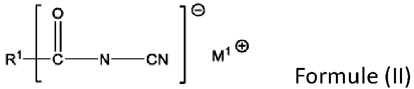 où, pour les radicaux R¹, R², R³, R⁴, R⁵ et les cations M¹, M², indépendamment les uns des autres les relations suivantes s'appliquent:
R¹ = hydrogène, alkyle en C₁ à C₂₀, cycloalkyle en C₃ à C₁₂, alcényle en C₂ à C₂₀, alcoxy en C₁ à C₂₀, aryle, alkylaryle ou arylalkyle, ou un radical Q, où Q est défini comme suit :
Q = alkyle en C₁ à C₂₀, cycloalkyle en C₃ à C₁₂, alcényle en C₂ à C₂₀, alcoxy en C₁ à C₂₀, aryle, alkylaryle ou arylalkyle, chacun substitué par un radical de formule (III) ou de formule (IV) 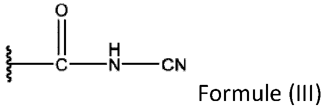 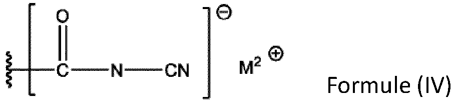
M¹, M² = indépendamment l'un de l'autre, Li, Na, K, 1/2Ca, 1/2Mg ou NR²R³R⁴R⁵, R²R³R⁴R⁵ = indépendamment l'un de l'autre, hydrogène ou alkyle en C₁ à C₂₀,
b) au moins un additif inoffensif ou autorisé à des fins agricoles, choisi parmi le groupe des solvants, des huiles, des substances tensioactives ou des émulsifiants,
le concentré présentant une concentration en substance active selon a) comprise entre 200 et 600 g/l.

8. Concentré de régulateur de croissance de plantes destiné à réguler la croissance générative des plantes ou à rompre la dormance des arbres fruitiers, comprenant
a) au moins une substance active issue du groupe des acylcyanamides ou un sel de ceux-ci selon la formule (I) ou la formule (II), où pour la formule (I) et la formule (II) : 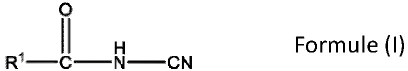 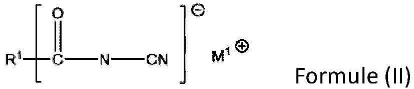 où, pour les radicaux R¹, R², R³, R⁴, R⁵ et les cations M¹, M², indépendamment les uns des autres les relations suivantes s'appliquent:
R¹ = hydrogène,
un radical alkyle choisi dans le groupe méthyle, éthyle, n-propyle, 1-méthyléthyle, n-butyle, 1-méthylpropyle, 2-méthylpropyle, 1,1-diméthyléthyle, n-pentyle, 1-méthylbutyle, 2-méthylbutyle, 3-méthylbutyle, 1, 1-diméthylpropyle, 1,2-diméthylpropyle, 2,2-diméthylpropyle, 1-éthylpropyle, 2-éthylpropyle ou n-hexyle, un radical alcényle choisi parmi le groupe éthényle, propényle, butényle, pentényle, hexényle, butadiényle, pentadiényle, hexadiényle ou hexatriényle, un groupe cycloalkyle en C₃ à C₁₂, alcoxy en C₁ à C₂₀, aryle, alkylaryle ou arylalkyle, ou un radical Q, où Q est défini comme suit :
Q = alkyle en C₁ à C₂₀, cycloalkyle en C₃ à C₁₂, alcényle en C₂ à C₂₀, alcoxy en C₁ à C₂₀, aryle, alkylaryle ou arylalkyle, chacun substitué par un radical de formule (III) ou de formule (IV) 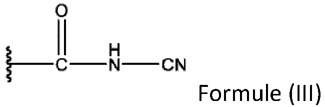 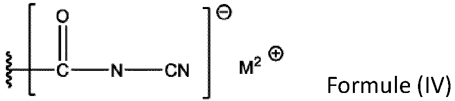
M¹, M² = indépendamment l'un de l'autre, Li, Na, K, 1/2Ca, 1/2Mg ou NR²R³R⁴R⁵, R²R³R⁴R⁵ = indépendamment l'un de l'autre, hydrogène ou alkyle en C₁ à C₂₀,
b) au moins un additif inoffensif ou autorisé à des fins agricoles, choisi parmi le groupe des solvants, des huiles, des substances tensioactives ou des émulsifiants, le concentré présentant une concentration en substance active selon a) comprise entre 200 et 600 g/l.

9. Concentré de régulateur de croissance de plantes selon la revendication 7, **caractérisé en ce que** le concentré
a) comprend au moins une substance active du groupe des acylcyanamides ou un sel de ceux-ci selon la formule (I) ou la formule (II), où, pour les radicaux R¹, R², R³, R⁴, R⁵ et les cations M¹, M², indépendamment les uns des autres, les relations suivantes s'appliquent :
R¹ = hydrogène, alkyle en C₁ à C₂₀, cycloalkyle en C₃ à C₁₂, alcényle en C₂ à C₂₀, alcoxy en C₁ à C₂₀, ou un radical Q, où Q est défini comme suit :
Q = alkyle en C₁ à C₂₀, cycloalkyle en C₃ à C₁₂, alcényle en C₂ à C₂₀, alcoxy en C₁ à C₂₀, chacun substitué par un radical de formule (III) ou de formule (IV)
M¹, M² = indépendamment l'un de l'autre, Li, Na, K, 1/2Ca, 1/2Mg ou NR²R³R⁴R⁵, R²R³R⁴R⁵ = indépendamment l'un de l'autre, hydrogène ou alkyle en C₁ à C₂₀.

10. Concentré de régulateur de croissance de plantes selon au moins l'une des revendications 7 à 9 précitées, **caractérisé en ce que** le concentré est une solution, une émulsion ou une solution émulsifiable qui comprend comme solvant un solvant choisi parmi le groupe constitué par l'eau, l'éthanol, l'isopropanol, le glycol, le polyglycol, la glycérine ou des mélanges de ces solvants.

11. Concentré de régulateur de croissance de plantes selon au moins l'une des revendications 7 à 10 précitées, **caractérisé en ce que** le concentré est une solution, une émulsion ou une solution émulsifiable qui comprend, comme huile, une huile choisie parmi le groupe des huiles végétales.

12. Concentré de régulateur de croissance de plantes selon au moins l'une des revendications 7 à 11 précitées, **caractérisé en ce que** le concentré est une solution, une émulsion ou une solution émulsifiable qui comprend, comme substance tensioactive, une substance tensioactive choisie parmi les tensioactifs non ioniques.

13. Concentré régulateur de croissance de plantes selon au moins l'une des revendications 7 à 12 précitées, **caractérisé en ce que** le concentré comprend comme substance tensioactive un tensioactif contenant un ou plusieurs composés du groupe des éthoxylates selon la formule (VII), des glucosides d'alcools gras selon la formule (VIII) ou des mélanges de ceux-ci, où pour les formules (VII) et (VIII),
R¹¹-O-(CH₂CH₂O)ₙ-H Formule (VII) 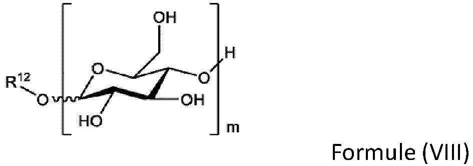
où, pour les radicaux R¹¹, R¹² et les indices n, m simultanément ou indépendamment :
R¹¹ = un groupe alkyle ou alcényle linéaire ou ramifié avec 6 à 24 atomes de carbone, un groupe alkyle partiellement ou totalement fluoré avec 6 à 18 atomes de carbone, un groupe phényle, un groupe phényle substitué par un groupe alkyle, un groupe siloxane monofonctionnel ou multifonctionnel,
R¹² = un groupe alkyle ou alcényle linéaire ou ramifié comportant 6 à 24 atomes de carbone,
n = un nombre compris entre 2 et 20,
m = un nombre compris entre 1 et 5.

14. Concentré de régulateur de croissance de plantes selon au moins l'une des revendications 7 à 13 précitées, **caractérisé en ce que** le concentré est une solution, une émulsion ou une solution émulsifiable qui comprend comme émulsifiant un émulsifiant du groupe des émulsifiants non ioniques huile dans l'eau.

15. Concentré de régulateur de croissance des plantes selon au moins l'une des revendications 7 à 14 précitées, **caractérisé en ce que** le concentré comprend en outre au moins un adjuvant de formulation autorisé à des fins agricoles choisi parmi le groupe des régulateurs de pH, des colorants, des épaississants, dispersants, solubilisants, modificateurs de viscosité, marqueurs et substances amères.

16. Concentré de régulateur de croissance de plantes selon la revendication 8, **caractérisé en ce que** le concentré comprend :
a) au moins une substance active choisie parmi sodium-formylcyanamide, sodium-acétylcyanamide, sodium-propionylcyanamide, sodium-butyrylcyanamide, sodium-isobutyrylcyanamide, sodium-n-méthoxycarbonylcyanamide, sodium-éthoxycarbonylcyanamide, potassium-formylcyanamide, potassium-acétylcyanamide, potassium-propionylcyanamide, potassium-n-butyrylcyanamide, potassium-isobutyrylcyanamide, potassium-méthoxycarbonylcyanamide ou potassium-éthoxycarbonylcyanamide,
b) au moins un additif inoffensif ou autorisé à des fins agricoles appartenant au groupe des solvants, et
c) au moins un additif inoffensif ou autorisé à des fins agricoles appartenant au groupe des huiles, des substances tensioactives ou des émulsifiants,
le concentré présentant une concentration en substance active comprise entre 100 et 600 g/l.

17. Procédé pour réguler la croissance générative des plantes ou pour rompre la dormance des arbres fruitiers, comprenant l'application par immersion, badigeonnage ou pulvérisation sur les branches, des pousses ou des bourgeons des plantes avec une solution aqueuse comprenant au moins une substance active du groupe des acylcyanamides ou un sel de ceux-ci selon la formule (I) ou la formule (II) pendant la dormance des plantes, où pour la formule (I) et la formule (II) 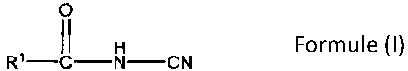 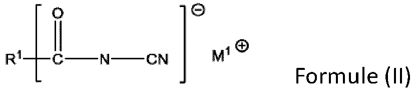 où, pour les radicaux R¹, R², R³, R⁴, R⁵ et les cations M¹, M², indépendamment les uns des autres les relations suivantes s'appliquent:
R¹ = hydrogène, alkyle en C₁ à C₂₀, cycloalkyle en C₃ à C₁₂, alcényle en C₂ à C₂₀, alcoxy en C₁ à C₂₀, aryle, alkylaryle ou arylalkyle, ou un radical Q, où Q est défini comme suit :
Q = alkyle en C₁ à C₂₀, cycloalkyle en C₃ à C₁₂, alcényle en C₂ à C₂₀, alcoxy en C₁ à C₂₀, aryle, alkylaryle ou arylalkyle, chacun substitué par un radical de formule (III) ou de formule (IV) 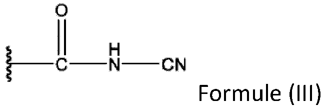 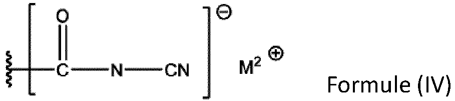
M¹, M² = indépendamment l'un de l'autre, Li, Na, K, 1/2Ca, 1/2Mg ou NR²R³R⁴R⁵, R²R³R⁴R⁵ = indépendamment l'un de l'autre, hydrogène ou alkyle en C₁ à C₂₀,
